# EUROPEAN PATENT APPLICATION

(11) **EP 4 797 777 A1**
(43) Date of publication of application: **26.08.2026**
(21) Application number: 24884019.1
(22) Date of filing: 08.07.2024
(51) Int. Cl.: H04W 24/08

(54) **SENSING METHOD, COMMUNICATION DEVICE, AND SYSTEM**

(30) Priority: 03.11.2023 CN 202311466042
(71) Applicant: HUAWEI TECHNOLOGIES CO., LTD., Shenzhen 518129 (CN)
(72) Inventor: LI, Zhongfeng, Shenzhen, Guangdong 518129 (CN); MA, Jianglei, Shenzhen, Guangdong 518129 (CN)
(74) Representative: Gill Jennings & Every LLP
(86) International application number: PCT/CN2024/104182
(87) International publication number: WO 2025/092011

(57) **Abstract**

This application provides a sensing method, a communication apparatus, and a system, and relates to the field of communication and sensing technologies. In the method, a first apparatus may complete transmission and measurement of a sensing signal and reporting of a measurement result of the sensing signal based on configuration information of the sensing signal and transmission configuration information of the measurement result of the sensing signal that are sent by a second apparatus. In this way, embodiments of this application can support the first apparatus in independently completing a sensing task.

## Description

This application claims priority to Chinese Patent Application No. 202311466042.X, filed with the China National Intellectual Property Administration on November 3, 2023 and entitled "SENSING METHOD, COMMUNICATION APPARATUS, AND SYSTEM", which is incorporated herein by reference in its entirety.

### TECHNICAL FIELD

This application relates to the field of communication technologies, and more specifically, to a sensing method, a communication apparatus, and a system.

### BACKGROUND

Positioning is one of sensing capabilities. 5G new radio (new radio, NR) standardizes air interface positioning. A core network supports a location management function, which is configured to coordinate and schedule positioning-related resources, determine a target location, estimate a velocity and measurement precision of a measurement signal, and so on. The location management function is located in the core network, and can respond to a positioning requirement from an external entity or a terminal device. In addition, a terminal device in a radio resource control (radio resource control, RRC) connected state or an RRC inactive (inactive) state needs to participate in a positioning procedure. For example, the terminal device participates in information receiving and sending, such as measuring and reporting a positioning reference signal sent by a network device, or sending a sounding reference signal (sounding reference signal, SRS) to the network device.

Currently, an existing sensing procedure (for example, a positioning procedure) requires a large amount of signaling exchange between a network device and a terminal device. For example, the network device sends a positioning reference signal (positioning reference signal, PRS) to the terminal device, and the terminal device measures the PRS and reports a measurement result of the PRS to the network device. However, the foregoing procedure cannot support the terminal device in independently completing a sensing task.

### SUMMARY

This application provides a sensing method, a communication apparatus, and a system, to support a terminal device in independently completing a sensing task.

According to a first aspect, a sensing method is provided. The method is applied to a first apparatus, and includes: receiving first configuration information and second configuration information, where the first configuration information indicates a configuration of a first sensing signal, the second configuration information indicates a transmission configuration of a measurement result of the first sensing signal, and the first sensing signal is a signal sent and received by the first apparatus; and sending the measurement result of the first sensing signal based on the second configuration information.

The solution in the first aspect may be performed by the first apparatus, a module (for example, a chip system) of the first apparatus, or a logical node, a logical module, or software that can implement all or some functions of the first apparatus. This is not limited herein. For ease of description, the following uses the first apparatus as an example for description.

In the foregoing solution, the first apparatus completes a sensing task based on sensing signal-related configuration information (including transmission of the sensing signal and transmission of the measurement result of the sensing signal) sent by a second apparatus. This can support the first apparatus in independently completing the sensing task.

In addition, a large amount of signaling exchange is not required between the first apparatus and the second apparatus, so that signaling exchange overheads for completing the sensing task between the first apparatus and the second apparatus can be reduced.

According to the first aspect, in a possible implementation, the method further includes: receiving third configuration information, where the third configuration information indicates a measurement method of the first sensing signal.

When the measurement method of the first sensing signal is indicated, the first apparatus may measure the first sensing signal according to the indicated measurement method. In this way, the first apparatus can send, to the second apparatus, a measurement result that is of the first sensing signal and that meets a requirement of the second apparatus. According to the first aspect, in a possible implementation, the method further includes: receiving first information, where the first information indicates a constraint condition, and an apparatus that meets the constraint condition performs at least one of sensing measurement and capability reporting.

The apparatus that meets the constraint condition is limited to performing at least one of sensing measurement and capability reporting, which helps reduce interference between different apparatuses. In other words, the constraint condition is configured, so that in this embodiment of this application, a resource conflict that occurs because a large quantity of apparatuses contend for resources when reporting measurement results and that therefore affects receiving of the measurement result of the sensing signal by the second apparatus can be avoided.

According to the first aspect, in a possible implementation, the method further includes: receiving first information, where the first information is used to request to feed back capability information, and the capability information indicates a capability that is of the first apparatus and that is associated with the first sensing signal; and sending the capability information.

The capability information of the first apparatus is reported, so that the second apparatus may configure transmission, measurement, reporting, and the like of the sensing signal for the first apparatus based on the capability of the first apparatus. In this way, the first apparatus can better complete the sensing task.

Specifically, the capability information of the first apparatus can be used by the second apparatus to configure the corresponding first configuration information and second configuration information for the first apparatus based on the capability of the first apparatus, so that the first apparatus can better complete the sensing task within a capability range of the first apparatus.

According to the first aspect, in a possible implementation, sending the capability information includes: sending the capability information by using a preamble and a payload; or sending the capability information by using a preamble.

For example, the first apparatus randomly selects a preamble from a preamble resource pool configured by the second apparatus and determines a channel corresponding to the preamble, to send the capability information of the first apparatus to the second apparatus, where the channel carries a payload used to carry the capability information of the first apparatus, and the preamble is used to distinguish between different first apparatuses.

For example, when less information is required to indicate the capability information of the first apparatus, the first apparatus may select, from the preamble resource pool based on a predefined or preconfigured correspondence between a preamble and a capability, a preamble that matches the capability of the first apparatus, to send the capability information of the first apparatus to the second apparatus. A quantity of preambles that match the capability information may be greater than one, so that a conflict caused when different first apparatuses select a same preamble can be reduced.

If the first apparatus is a device in a non-connected state, the first apparatus may send the capability information of the first apparatus by using the preamble and the payload, or the first apparatus may send the capability information of the first apparatus by using the preamble. This can reduce a delay and signaling exchange overheads.

If the first apparatus is a device in a connected state, the first apparatus may alternatively send the capability information of the first apparatus to the second apparatus by using an uplink, a sidelink, or the like. When the first apparatus sends the capability information of the first apparatus by using the preamble and the payload or by using the preamble, this can reduce a delay and signaling exchange overheads.

According to the first aspect, in a possible implementation, sending the measurement result of the first sensing signal based on the first information includes: determining a first parameter based on a bandwidth capability of the first apparatus, where the first configuration information includes at least one parameter, and the at least one parameter includes the first parameter; and transmitting the first sensing signal based on the first parameter.

The second apparatus may configure, based on bandwidth capabilities of different apparatuses, corresponding parameters used to transmit sensing signals, and the first apparatus may determine, based on the bandwidth capability of the first apparatus, an appropriate parameter used to transmit the first sensing signal, so that each apparatus can better perform a sensing task within a bandwidth range.

According to the first aspect, in a possible implementation, sending the measurement result of the first sensing signal based on the first information includes: determining a first resource based on the first parameter, where the second configuration information is used to configure at least one resource, and the at least one resource includes the first resource; and sending the measurement result of the first sensing signal by using the first resource.

The second apparatus may configure, based on different parameters used to transmit sensing signals, one or more resources used to transmit measurement results of sensing signals, so that different apparatuses can select different resources during resource selection. This avoids a resource conflict.

In addition, because the first parameter is associated with the first resource, when the first apparatus sends the measurement result of the first sensing signal to the second apparatus by using the first resource, the second apparatus may determine, based on the first resource, the first parameter selected by the first apparatus, so that the first apparatus does not need to report, to the second apparatus, a parameter selected by the first apparatus for transmitting the first sensing signal. This reduces signaling exchange overheads.

According to the first aspect, in a possible implementation, sending the measurement result of the first sensing signal based on the first information includes: determining a second resource based on the bandwidth capability of the first apparatus, where the second configuration information is used to configure at least one resource, and the at least one resource includes the second resource; and sending the measurement result of the first sensing signal by using the second resource.

The first apparatus sends the measurement result of the first sensing signal by using the second resource corresponding to the bandwidth capability, so that the second apparatus obtains, by using the second resource, a bandwidth corresponding to the measurement result of the first sensing signal, and the first apparatus does not need to include the bandwidth in the measurement result of the first sensing signal. This reduces signaling indication overheads.

According to the first aspect, in a possible implementation, the method further includes: sending a bandwidth for measuring the first sensing signal.

The first apparatus may further report, to the second apparatus, a bandwidth used when the first apparatus measures the first sensing signal.

The bandwidth for measuring the first sensing signal may be a bandwidth index value. The bandwidth for measuring the first sensing signal by the first apparatus is reported (which may be also carried), so that the second apparatus may obtain a bandwidth value corresponding to the measurement result of the first sensing signal. This helps the second apparatus perform further processing based on a plurality of measurement results from a same bandwidth, and therefore improves accuracy of the measurement result.

According to the first aspect, in a possible implementation, the bandwidth for measuring the first sensing signal corresponds to the measurement result of the first sensing signal.

In this way, the second apparatus may determine, based on the bandwidth used when the first apparatus measures the first sensing signal, a bandwidth in which the measurement result of the first sensing signal is obtained, and further process the plurality of measurement results corresponding to the same bandwidth. This helps improve sensing performance and sensing result quality.

According to the first aspect, in a possible implementation, the method further includes: sending the preamble used when the first apparatus reports the capability information.

The preamble is a preamble used when the first apparatus reports the capability of the first apparatus. The second apparatus may configure a sensing signal bandwidth based on the bandwidth capability reported by the first apparatus, and establish a correspondence between the bandwidth capability and a preamble of an apparatus having the capability. The preamble used when the first apparatus reports the capability information is reported, so that the second apparatus may determine, based on the preamble and an association relationship between a preamble and a bandwidth, a bandwidth used by the first apparatus, and can further determine a bandwidth value corresponding to the measurement result of the first sensing signal. This helps the second apparatus perform further processing based on the plurality of measurement results from the same bandwidth, and therefore improves accuracy of the measurement result.

According to the first aspect, in a possible implementation, the preamble used when the first apparatus reports the capability information corresponds to the measurement result of the first sensing signal.

In this way, the second apparatus may determine, based on the preamble, the bandwidth used when the first apparatus measures the first sensing signal, and further determine the bandwidth corresponding to the measurement result of the first sensing signal. This helps the second apparatus perform further processing based on the plurality of measurement results from the same bandwidth, and therefore improves accuracy of the measurement result.

According to the first aspect, in a possible implementation, sending the measurement result of the first sensing signal based on the first information includes: The first apparatus sends, to the second apparatus, a bandwidth corresponding to the first sensing signal.

When the first apparatus sends the measurement result of the first sensing signal to the second apparatus, the first apparatus also reports, to the second apparatus, a bandwidth used when the first apparatus transmits the first sensing signal.

A bandwidth for transmitting the first sensing signal may be a bandwidth index value. When the measurement result of the first sensing signal is reported, the bandwidth is carried together with the measurement result, so that the second apparatus may obtain a bandwidth value corresponding to the measurement result of the first sensing signal. This helps the second apparatus perform further processing based on a plurality of measurement results from a same bandwidth, and therefore improves accuracy of the measurement result.

According to the first aspect, in a possible implementation, sending the measurement result of the first sensing signal based on the first information includes: The first apparatus sends a preamble corresponding to the measurement result of the first sensing signal.

The preamble is a preamble used when the first apparatus reports the capability. The second apparatus may configure a sensing signal bandwidth based on the bandwidth capability reported by the first apparatus, and establish a correspondence between the bandwidth capability and a preamble of an apparatus having the capability. When the measurement result of the first sensing signal is reported, the preamble corresponding to the measurement result of the first sensing signal is carried together with the measurement result, so that the second apparatus may obtain the bandwidth value corresponding to the measurement result of the first sensing signal. This helps the second apparatus perform further processing based on the plurality of measurement results from the same bandwidth, and therefore improves accuracy of the measurement result.

According to the first aspect, in a possible implementation, sending the measurement result of the first sensing signal includes: sending the measurement result of the first sensing signal by using a preamble and a payload; or sending the measurement result of the first sensing signal by using a preamble.

For example, the first apparatus randomly selects a preamble from the preamble resource pool configured by the second apparatus and determines a channel corresponding to the preamble, to send the measurement result of the first sensing signal to the second apparatus, where the channel carries a payload used to carry the measurement result of the first sensing signal, and the preamble is used to distinguish between different first apparatuses.

For example, when less information is required to indicate the measurement result of the first sensing signal, the first apparatus may select, from the preamble resource pool based on a predefined or preconfigured correspondence between a preamble and a measurement result of a first sensing signal, a preamble that matches the capability of the first apparatus, to send the measurement result of the first sensing signal to the second apparatus. A quantity of preambles that match the measurement result of the first sensing signal may be greater than one, so that a conflict caused when different first apparatuses select a same preamble can be reduced.

If the first apparatus is the device in the non-connected state, the first apparatus may send the measurement result of the first sensing signal by using the preamble and the payload, or the first apparatus may send the measurement result of the first sensing signal by using the preamble. This can reduce a delay and signaling exchange overheads.

If the first apparatus is the device in the connected state, the first apparatus may alternatively send the measurement result of the first sensing signal to the second apparatus by using an uplink, a sidelink, or the like. When the first apparatus sends the measurement result of the first sensing signal by using the preamble and the payload or by using the preamble, this can reduce a delay and signaling exchange overheads.

According to the first aspect, in a possible implementation, the method further includes: sending a third sensing signal based on a second parameter.

In this way, the first apparatus can complete a transmit-receive separated sensing task.

According to a second aspect, a sensing method is provided. The method is applied to a second apparatus, and includes: sending first configuration information and second configuration information, where the first configuration information indicates a configuration of a first sensing signal, the second configuration information indicates a transmission configuration of a measurement result of the first sensing signal, and the first sensing signal is a signal sent and received by a first apparatus; and receiving the measurement result of the first sensing signal.

The solution in the second aspect may be performed by the second apparatus, a module (for example, a chip system) of the second apparatus, or a logical node, a logical module, or software that can implement all or some functions of the second apparatus. This is not limited herein. For ease of description, the following uses the second apparatus as an example for description.

In the foregoing solution, the second apparatus sends sensing signal-related configuration information (including transmission of the sensing signal and transmission of the measurement result of the sensing signal) to the first apparatus, and the first apparatus may complete a self-sensing task based on the sensing signal-related configuration information. This can support the first apparatus in independently completing the sensing task.

In addition, a large amount of interaction is not required between the first apparatus and the second apparatus, so that signaling exchange overheads for completing the sensing task between the first apparatus and the second apparatus can be reduced.

According to the second aspect, in a possible implementation, the method further includes: sending third configuration information, where the third configuration information indicates a measurement method of the first sensing signal.

When the measurement method of the first sensing signal is indicated, the first apparatus may measure the first sensing signal according to the indicated measurement method. In this way, the first apparatus can send, to the second apparatus, a measurement result that is of the first sensing signal and that meets a requirement of the second apparatus.

According to the second aspect, in a possible implementation, the method includes: sending first information, where the first information indicates a constraint condition, and an apparatus that meets the constraint condition performs at least one of sensing measurement and capability reporting.

The apparatus that meets the constraint condition is limited to performing at least one of sensing measurement and capability reporting, which helps reduce interference between different apparatuses. In other words, the constraint condition is configured, so that in this embodiment of this application, a resource conflict that occurs because a large quantity of apparatuses contend for resources when reporting measurement results and that therefore affects receiving of the measurement result of the sensing signal by the second apparatus can be avoided.

According to the second aspect, in a possible implementation, the method further includes: sending first information, where the first information is used to request to feed back capability information, and the capability information indicates a capability that is of the first apparatus and that is associated with the first sensing signal; and receiving the capability information.

The capability information of the first apparatus is obtained, so that the second apparatus may configure transmission, measurement, reporting, and the like of the sensing signal for the first apparatus based on the capability of the first apparatus. In this way, the first apparatus can better complete the sensing task.

Specifically, the capability information of the first apparatus can be used by the second apparatus to configure the corresponding first configuration information and second configuration information for the first apparatus based on the capability of the first apparatus, so that the first apparatus can better complete the sensing task within a capability range of the first apparatus.

According to the second aspect, in a possible implementation, receiving the capability information includes: receiving the capability information by using a preamble and a payload; or receiving the capability information by using a preamble.

According to the second aspect, in a possible implementation, receiving the measurement result of the first sensing signal includes: receiving the measurement result of the first sensing signal by using a preamble and a payload; or receiving the measurement result of the first sensing signal by using a preamble.

In this way, a delay and signaling exchange overheads can be reduced.

According to the second aspect, in a possible implementation, the method further includes: receiving a bandwidth for measuring the first sensing signal by the first apparatus.

When the first apparatus sends the measurement result of the first sensing signal to the second apparatus, the first apparatus may further report, to the second apparatus, a bandwidth used when the first apparatus measures the first sensing signal.

The bandwidth for measuring the first sensing signal may be a bandwidth index value. When the measurement result of the first sensing signal is reported, the bandwidth is further carried (which may be carried together with the measurement result), so that the second apparatus may obtain a bandwidth value corresponding to the measurement result of the first sensing signal. This helps the second apparatus perform further processing based on a plurality of measurement results from a same bandwidth, and therefore improves accuracy of the measurement result.

According to the second aspect, in a possible implementation, the bandwidth for measuring the first sensing signal by the first apparatus corresponds to the measurement result of the first sensing signal.

In this way, the second apparatus may determine, based on the bandwidth used when the first apparatus measures the first sensing signal, a bandwidth in which the measurement result of the first sensing signal is obtained.

Further, the second apparatus may further process the plurality of measurement results from the same bandwidth. This helps improve sensing performance and sensing result quality.

According to the second aspect, in a possible implementation, the method further includes: receiving the preamble used when the first apparatus reports the capability information.

The preamble is a preamble used when the first apparatus reports the capability. The second apparatus may configure a sensing signal bandwidth based on a bandwidth capability reported by the first apparatus, and establish a correspondence between the bandwidth capability and a preamble of an apparatus having the capability. When the measurement result of the first sensing signal is reported, the preamble corresponding to the measurement result of the first sensing signal is carried together with the measurement result, so that the second apparatus may obtain the bandwidth value corresponding to the measurement result of the first sensing signal. This helps the second apparatus perform further processing based on the plurality of measurement results from the same bandwidth, and therefore improves accuracy of the measurement result.

According to the second aspect, in a possible implementation, the preamble used when the first apparatus reports the capability information corresponds to the measurement result of the first sensing signal.

According to the second aspect, in a possible implementation, the second apparatus receives a bandwidth that is from the first apparatus and that corresponds to the first sensing signal.

When the first apparatus sends the measurement result of the first sensing signal to the second apparatus, the first apparatus also reports, to the second apparatus, a bandwidth used when the first apparatus transmits the first sensing signal.

A bandwidth for transmitting the first sensing signal may be a bandwidth index value. When the measurement result of the first sensing signal is reported, the bandwidth is carried together with the measurement result, so that the second apparatus may obtain a bandwidth value corresponding to the measurement result of the first sensing signal. This helps the second apparatus perform further processing based on a plurality of measurement results from a same bandwidth, and therefore improves accuracy of the measurement result.

According to the second aspect, in a possible implementation, the second apparatus receives a preamble that is from the first apparatus and that corresponds to the measurement result of the first sensing signal.

The preamble is a preamble used when the first apparatus reports the capability. The second apparatus may configure a sensing signal bandwidth based on a bandwidth capability reported by the first apparatus, and establish a correspondence between the bandwidth capability and a preamble of an apparatus having the capability. When the measurement result of the first sensing signal is reported, the preamble corresponding to the measurement result of the first sensing signal is carried together with the measurement result, so that the second apparatus may obtain the bandwidth value corresponding to the measurement result of the first sensing signal. This helps the second apparatus perform further processing based on the plurality of measurement results from the same bandwidth, and therefore improves accuracy of the measurement result.

With reference to the solution in either the first aspect or the second aspect, in a possible implementation, a measurement method of the first sensing signal is predefined.

When the measurement method of the first sensing signal is predefined, the first apparatus may measure the first sensing signal according to the predefined measurement method. This can reduce signaling exchange overheads.

With reference to the solution in either the first aspect or the second aspect, in a possible implementation, the measurement method of the first sensing signal includes at least one of the following: a round trip time measurement method, an angle measurement method, and a Doppler measurement method.

In this way, in this embodiment of this application, a plurality of measurement methods are supported to complete the sensing task.

With reference to the solution in either the first aspect or the second aspect, in a possible implementation, the measurement result of the first sensing signal includes at least one of the following: a transmission resource identifier, received signal strength, received signal strength of each multipath component, a time difference between sending time and receiving time, a receiving timestamp, and a difference between the receiving timestamp and a receiving timestamp of a second sensing signal, where the second sensing signal is a signal sent by the second apparatus to the first apparatus.

This helps the second apparatus obtain round trip time information of a sensing target.

With reference to the solution in either the first aspect or the second aspect, in a possible implementation, the measurement result of the first sensing signal includes at least one of the following: a transmission resource identifier, a transmit beam, a receive beam, received signal strength, received signal strength of each multipath component, and a receiving timestamp.

This helps the second apparatus obtain orientation information of a sensing target.

With reference to the solution in either the first aspect or the second aspect, in a possible implementation, the measurement result of the first sensing signal includes at least one of the following: a transmission resource identifier, a Doppler shift value obtained based on the first sensing signal, a velocity value that is of a sensing target and that is obtained based on the first sensing signal, and a receiving timestamp.

This helps the second apparatus obtain Doppler measurement information of the sensing target.

With reference to the solution in either the first aspect or the second aspect, in a possible implementation, the constraint condition includes at least one of the following: received signal strength, a bandwidth capability, a geographic location range, a beam range, a duplex capability type, a measurement method, self-sensing transmit-receive beam reciprocity, a maximum quantity of antenna ports, a velocity range, and an apparatus type.

Based on the foregoing listed one or more parameters, in embodiments of this application, apparatuses participating in sensing measurement and capability reporting may be screened, and only the apparatus that meets the constraint condition can perform parameter sensing measurement and capability reporting. This can avoid the resource conflict that occurs because a large quantity of apparatuses contend for resources when reporting measurement results and that therefore affects receiving of the measurement result of the sensing signal by the second apparatus.

With reference to the solution in either the first aspect or the second aspect, in a possible implementation, the capability information includes at least one of the following: a bandwidth capability, a duplex capability type, a measurement method, a beam reciprocity capability, and a maximum quantity of antenna ports.

For example, the bandwidth capability is reported, so that the second apparatus may determine a bandwidth that is supported by the first apparatus and that is used for sensing signal transmission, and the second apparatus may configure the sensing signal-related configuration information based on the bandwidth supported by the first apparatus. In this way, the first apparatus can better complete the sensing task within the capability range of the first apparatus.

For example, a duplex capability of the first apparatus is reported, so that the second apparatus may configure a time range of a sensing receiving window of the first apparatus in a targeted manner. In addition, this helps the second apparatus determine minimum sensible measurement distances corresponding to different duplex modes of the first apparatus.

For example, the measurement method supported by the first apparatus is reported, so that the second apparatus may perform sensing measurement configuration of the sensing signal with reference to a sensing requirement and the measurement method that can be supported by the first apparatus. For example, the first apparatus supports an angle-based measurement method, and the angle-based method is insensitive to a bandwidth, so that the second apparatus may configure a small sensing signal bandwidth for the first apparatus to perform angle measurement reporting, to meet the sensing requirement.

For example, capability information of beam reciprocity of the first apparatus is reported, so that if the first apparatus supports beam reciprocity, the second apparatus may complete configuration of a receive beam or a transmit beam by configuring only a transmit beam or a receive beam of the first apparatus, that is, configure a transmit-receive beam pair of the first apparatus. This helps reduce signaling overheads. Then, the first apparatus performs measurement reporting on a transmitted sensing signal based on the transmit-receive beam pair.

For example, the maximum quantity of antenna ports supported by the first apparatus is reported, so that the second apparatus may configure a time-frequency transmission resource of the corresponding sensing signal to perform sensing measurement reporting.

With reference to the solution in either the first aspect or the second aspect, in a possible implementation, the first configuration information is associated with a capability of the first apparatus, and/or the second configuration information is associated with the capability of the first apparatus.

In this way, the first apparatus can better complete the sensing task within the capability range of the first apparatus.

With reference to the solution in either the first aspect or the second aspect, in a possible implementation, that the first configuration information is associated with the capability of the first apparatus includes: the first configuration information is configured based on the capability of the first apparatus; or a capability pre-associated with the first configuration information is the capability of the first apparatus.

In this way, the first apparatus can better complete the sensing task within the capability range of the first apparatus.

With reference to the solution in either the first aspect or the second aspect, in a possible implementation, that the second configuration information is associated with the capability of the first apparatus includes: the second configuration information is configured based on the capability of the first apparatus; or a capability pre-associated with the second configuration information is the capability of the first apparatus.

In this way, the first apparatus can better complete the sensing task within the capability range of the first apparatus.

With reference to the solution in either the first aspect or the second aspect, in a possible implementation, the first configuration information is used to configure the first parameter; and the first parameter includes at least one of the following: a subcarrier spacing, a cyclic prefix length, sending time, receiving window time, a bandwidth, a frequency start position, a sequence, a transmit beam, and a receive beam; or the first parameter includes at least one of the following: a subcarrier spacing, a cyclic prefix length, sending time, receiving window time, a frequency start position, a sequence, a transmit beam, and a receive beam.

In this way, the first apparatus can send and receive the first sensing signal based on some or all of the parameters listed above.

With reference to the solution in either the first aspect or the second aspect, in a possible implementation, the first information further includes fourth configuration information, where the fourth configuration information is used to configure transmission of the third sensing signal, the third sensing signal is a sensing signal sent by the first apparatus to the second apparatus, the fourth configuration information is used to configure the second parameter, the second parameter is used for transmission of the third sensing signal, and the first parameter is associated with the second parameter.

It should be noted that the first parameter is associated with the second parameter, so that the first apparatus may determine the first parameter based on the second parameter and an association relationship between the second parameter and the first parameter. For example, the subcarrier spacing in the first parameter may be determined based on a subcarrier spacing in the second parameter. For example, the second apparatus indicates, to the first apparatus, a multiple or factor relationship between the subcarrier spacing in the first parameter and the subcarrier spacing in the second parameter, to indicate the subcarrier spacing in the first parameter; and the first apparatus may determine the subcarrier spacing in the first parameter based on the subcarrier spacing in the second parameter and the multiple or factor relationship. In this way, signaling overheads for indicating the first parameter can be reduced.

With reference to the solution in either the first aspect or the second aspect, in a possible implementation, the second parameter includes at least one of the following: a subcarrier spacing, a cyclic prefix length, sending time, receiving window time, a bandwidth, a frequency start position, a sequence, a transmit beam, and a receive beam.

In this way, the first apparatus can send the third sensing signal based on some or all of the parameters listed above.

With reference to the solution in either the first aspect or the second aspect, in a possible implementation, the first parameter includes the bandwidth, and the bandwidth in the first parameter is determined based on the bandwidth in the second parameter.

In this way, the second apparatus can indicate the bandwidth in the first parameter to the first apparatus with low signaling overheads. For example, the second apparatus indicates, to the first apparatus, an offset between the bandwidth in the first parameter and the bandwidth in the second parameter, to indicate the bandwidth in the first parameter; and the first apparatus may determine the bandwidth in the first parameter based on the bandwidth in the second parameter and the offset. In this way, signaling exchange overheads can be reduced.

With reference to the solution in either the first aspect or the second aspect, in a possible implementation, the first apparatus is an apparatus in an inactive state; the first apparatus is a low power consumption apparatus; the first apparatus is an apparatus in an idle state; or the first apparatus is an apparatus in a connected state.

In this way, in embodiments of this application, apparatuses in different states can be all supported in completing a sensing task.

The apparatuses in the different states are all enabled to participate in a collaborative sensing task, so that an available range of collaborative sensing is greatly increased, geographic space in which sensing can be performed is increased, and sensing quality is improved.

With reference to the solution in either the first aspect or the second aspect, in a possible implementation, the first configuration information and/or the second configuration information are/is carried in system information, or the first configuration information and/or the second configuration information are/is carried in capability reporting response information.

When the first configuration information and/or the second configuration information are/is carried in the system information, apparatuses in various RRC states may all receive the information, so that the apparatus that meets the constraint condition can perform capability reporting or sensing measurement reporting based on the indication information.

When the first configuration information and/or the second configuration information are/is carried in the capability reporting response information, the apparatus that meets the constraint condition to perform capability reporting, rather than another apparatus, reads the response information to perform further sensing measurement reporting.

With reference to the solution in either the first aspect or the second aspect, in a possible implementation, the first configuration information and/or the second configuration information are/is carried in capability reporting response information, and the second information is carried in system information.

When the first configuration information and/or the second configuration information are/is carried in the capability reporting response information, the apparatus that meets the constraint condition to perform capability reporting, rather than another apparatus, reads the response information to perform further sensing measurement reporting.

When the second information is carried in the system information, capability request information may be broadcast to apparatuses in different RRC states, and as many apparatuses that meet the constraint condition as possible are enabled to perform capability reporting. Then, these apparatuses that report capabilities receive capability reporting response information, and perform sensing measurement reporting based on the capability reporting response information.

The second information is carried in the system information, and the first configuration information and/or the second configuration information are/is carried in the capability reporting response information, so that a random sensing reporting process is enabled to perform sensing measurement reporting or a random access procedure is used to perform sensing measurement reporting, and the apparatus does not need to establish an RRC connection to perform sensing measurement reporting. Therefore, an interaction process is reduced, signaling overheads are reduced, and a delay is reduced.

According to a third aspect, a communication apparatus is provided. The apparatus includes: an interface unit, configured to receive first configuration information and second configuration information, where the first configuration information indicates a configuration of a first sensing signal, the second configuration information indicates a transmission configuration of a measurement result of the first sensing signal, and the first sensing signal is a signal sent and received by a first apparatus. The interface unit is further configured to send the measurement result of the first sensing signal based on the second configuration information.

In a possible implementation, the communication apparatus may further include a processing unit, and the processing unit is configured to process information processing-related content of the communication apparatus. For specific descriptions, refer to the foregoing descriptions. Details are not described again.

The communication apparatus according to the third aspect may be configured to perform the method according to any one of the first aspect and the possible implementations of the first aspect. For specific descriptions, refer to the descriptions of the method according to any one of the first aspect and the possible implementations of the first aspect. Details are not described again.

According to a fourth aspect, a communication apparatus is provided. The apparatus includes: an interface unit, configured to send first configuration information and second configuration information, where the first configuration information indicates a configuration of a first sensing signal, the second configuration information indicates a transmission configuration of a measurement result of the first sensing signal, and the first sensing signal is a signal sent and received by a first apparatus. The interface unit is further configured to receive the measurement result of the first sensing signal.

In a possible implementation, the communication apparatus may further include a processing unit, and the processing unit is configured to process information processing-related content of the communication apparatus. For specific descriptions, refer to the foregoing descriptions. Details are not described again.

The communication apparatus according to the fourth aspect may be configured to perform the method according to any one of the second aspect and the possible implementations of the second aspect. For specific descriptions, refer to the descriptions of the method according to any one of the second aspect and the possible implementations of the second aspect. Details are not described again.

According to a fifth aspect, an embodiment of this application provides a communication apparatus. The apparatus includes a module configured to perform the method according to all possible implementations of the first aspect or the second aspect.

According to a sixth aspect, an embodiment of this application provides a communication apparatus. The apparatus includes an interface circuit and a processor. The communication apparatus is configured to perform any possible implementation of the first aspect or the second aspect.

The interface circuit may alternatively be a communication interface. The processor may alternatively be a logic circuit or a processing circuit.

According to a seventh aspect, an embodiment of this application provides a computer-readable medium. The computer-readable medium stores program code to be executed by a terminal device, and the program code includes instructions used to perform any possible implementation of the first aspect or the second aspect.

According to an eighth aspect, an embodiment of this application provides a computer program product storing computer-readable instructions. When the computer-readable instructions are run on a computer, the computer is enabled to perform any possible implementation of the first aspect or the second aspect.

According to a ninth aspect, an embodiment of this application provides a communication system. The communication system includes an apparatus that has a function of implementing any possible implementation of the first aspect and the second aspect.

According to a tenth aspect, an embodiment of this application provides a processor. The processor is configured to be coupled to a memory, and is configured to perform any possible implementation of the first aspect or the second aspect.

According to an eleventh aspect, a communication apparatus is provided. The apparatus includes a processor, configured to execute computer instructions stored in a memory, to enable the communication apparatus to perform the method according to any possible implementation of the first aspect or the second aspect.

In a possible implementation, the communication apparatus further includes the memory.

In a possible implementation, the communication apparatus further includes a communication interface, the communication interface is coupled to the processor, and the communication interface is configured to input and/or output information.

According to a twelfth aspect, a chip is provided. The chip is connected to a memory, and the chip is configured to read and execute a software program stored in the memory, to perform the method according to any possible implementation of the first aspect or the second aspect.

### BRIEF DESCRIPTION OF DRAWINGS

FIG. 1 is a diagram of a communication system to which embodiments of this application are applicable;
FIG. 2 is an interaction flowchart of a sensing method according to an embodiment of this application;
FIG. 3 is an interaction flowchart of another sensing method according to an embodiment of this application;
FIG. 4 is an interaction flowchart of still another sensing method according to an embodiment of this application;
FIG. 5 is a diagram of a sensing procedure according to an embodiment of this application;
FIG. 6 is a diagram of a communication apparatus according to an embodiment of this application;
FIG. 7 is a diagram of another communication apparatus according to an embodiment of this application; and
FIG. 8 is a block diagram of a chip system according to an embodiment of this application.

### DESCRIPTION OF EMBODIMENTS

The following describes technical solutions of this application with reference to accompanying drawings.

For ease of understanding embodiments of this application, the following descriptions are provided first.
1. Unless otherwise specified, "a plurality of" means two or more than two.
2. Unless otherwise specified or there is a logic conflict, terms and/or descriptions in different embodiments of this application are consistent and may be mutually referenced, and technical features in different embodiments may be combined based on an internal logical relationship thereof to form a new embodiment.
3. Various numbers in this application are merely used for differentiation for ease of description, but are not intended to limit the protection scope of this application. Sequence numbers in this application do not mean an execution sequence, and an execution sequence of processes should be determined based on functions and internal logic of the processes. For example, in the specification, claims, and accompanying drawings of this application, terms "first", "second", "third", "fourth", and various other term numbers (if existent) are intended to distinguish between similar objects, but do not necessarily indicate a specific order or sequence. Data used in such a way is interchangeable in appropriate circumstances, so that embodiments described herein can be implemented in an order other than the order illustrated or described herein.
   In addition, any embodiment or design solution described with "example" or "for example" in this application should not be explained as being more preferred or having more advantages than another embodiment or design solution. Exactly, use of terms such as "example" or "for example" is intended to present a related concept in a specific manner for ease of understanding.
4. Terms "include", "have", and any variants thereof are intended to cover the non-exclusive inclusion. For example, a process, method, system, product, or device that includes a series of steps or units is not necessarily limited to those expressly listed steps or units, but may include other steps or units not expressly listed or inherent to the process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in a plurality of manners, for example, but not limited to, a manner of directly enabling the to-be-enabled information. For example, the to-be-enabled information or an index of the to-be-enabled information is enabled. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or pre-agreed on. For example, specific information may alternatively be enabled based on an arrangement sequence of pieces of information that is pre-agreed on (for example, specified in a protocol), to reduce enabling overheads to some extent. In addition, a common part of all pieces of information may be further identified and enabled in a unified manner, to reduce enabling overheads caused by separately enabling same information.
6. In this application, "preconfigure" may include "predefine", for example, "define in a protocol". "Predefine" may be implemented by prestoring, in a device (for example, including network elements), corresponding code, a corresponding table, or other related information that may be used for indication. A specific implementation thereof is not limited in this application.
7. "Store" or "save" in this application may mean "be stored in one or more memories". The one or more memories may be separately disposed, or may be integrated into an encoder, a decoder, a processor, or a communication apparatus. Alternatively, a part of the one or more memories may be separately disposed, and the other part of the one or more memories may be integrated into a decoder, a processor, or a communication apparatus. A type of the memory may be a storage medium in any form. This is not limited.
8. A "protocol" in this application may be a standard protocol in the communication field, for example, may include a 4th generation (4th generation, 4G) network protocol, a 5th generation (5th generation, 5G) network protocol, an NR protocol, a 5.5G network protocol, a 6th generation (6th generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural.
11. In this application, an "indication" may include a direct indication, an indirect indication, an explicit indication, and an implicit indication. When a piece of indication information is described as indicating A, it may be understood as that the indication information carries A, directly indicates A, or indirectly indicates A.
   In this application, information indicated by the indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of pieces of information that is pre-agreed on (for example, specified in a protocol), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or may be different.
12. In this application, "send" and "receive" indicate signal transmission directions. For example, "send information to XX" may be understood as that a destination end of the information is XX, and may include direct sending through an air interface, or may include indirect sending through an air interface by another unit or module. "Receive information from YY" may be understood as that a source end of the information is YY, and may include direct receiving from YY through an air interface, or may include indirect receiving from YY through an air interface from another unit or module. "Send" may also be understood as "output" from a chip interface, and "receive" may also be understood as "input" into the chip interface. In other words, sending and receiving may be performed between devices, for example, between a network device and a terminal device; or may be performed in a device, for example, sending or receiving is performed between components, modules, chips, software modules, or hardware modules in the device through a bus, a cable, or an interface.

A communication system to which embodiments of this application are applicable is first described.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, or another communication system.

A terminal device in embodiments of this application includes various devices having a wireless communication function, and the terminal device may be configured to connect to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multicopter, a quadcopter, or an airplane), a ship, a remote control device, a smart home device, or an industrial device; may be an apparatus built in the foregoing device (for example, a communication module, a modem, or a chip in the foregoing device); or may be another processing device connected to the wireless modem. For ease of description, an example in which the terminal device is a terminal or a UE is used below for description.

In some scenarios, the terminal device may alternatively serve as a base station. For example, the terminal device may serve as a scheduling entity, and provide a sidelink (sidelink) signal between UEs in scenarios such as V2X, D2D, or P2P.

In embodiments of this application, an apparatus configured to implement a function of the terminal device may be a terminal device; or may be an apparatus, for example, a chip system or a chip, that can support the terminal device in implementing the function, where the apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be substituted with the following names, such as a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radio frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network-side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In embodiments of this application, an apparatus configured to implement a function of the network device may be a terminal device; or may be an apparatus, for example, a chip system or a chip, that can support the network device in implementing the function, where the apparatus may be installed in the network device. In embodiments of this application, the chip system may include a chip, or may include a chip and another discrete component.

The network device and the terminal device may be deployed on land, where the deployment includes indoor or outdoor, and handheld or vehicle-mounted deployment; may be deployed on water; or may be deployed on an airplane, a balloon, and a satellite in air. A scenario in which the network device and the terminal device are located is not limited in embodiments of this application.

First, a network architecture applicable to embodiments of this application is briefly described.

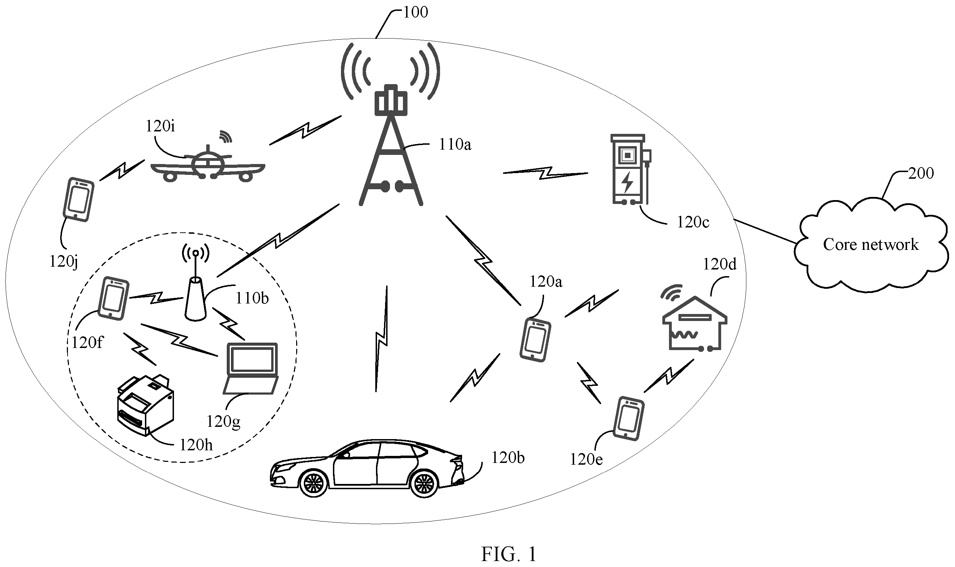

FIG. 1 is a diagram of a communication system to which embodiments of this application are applicable. As shown in FIG. 1, the communication system includes a radio access network (radio access network, RAN) 100 and a core network (core network, CN) 200. The RAN 100 includes at least one RAN node (for example, 110a and 110b, which are collectively referred to as 110) and at least one terminal device (for example, 120a to 120j, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud RAN (cloud RAN, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and forms a part of the communication system, to help the terminal device implement wireless access. A plurality of RAN nodes 110 in the communication system may be nodes of a same type, or may be nodes of different types. In some scenarios, roles of the RAN node 110 and the terminal device 120 are relative. For example, a network element 120i may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Sometimes, both the RAN node 110 and the terminal 120 are referred to as communication apparatuses. For example, the network elements 110a and 110b may be understood as communication apparatuses having a base station function, and the network elements 120a to 120j may be understood as communication apparatuses having a terminal function.

In a possible scenario, the RAN node may be a BS, an eNodeB, an access point (access point, AP), a TRP, a gNB, a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario.

Optionally, the RAN node may alternatively be a server, a wearable device, a vehicle, a vehicle-mounted device, or the like. For example, an access network device in a V2X technology may be a roadside unit (roadside unit, RSU) or a base station. All or some functions of the RAN node in this application may alternatively be implemented by using a software function running on hardware, or may be implemented by using a virtualized function instantiated on a platform (for example, a cloud platform). The RAN node in this application may alternatively be a logical node, a logical module, or software that can implement all or some functions of the RAN node.

In another possible scenario, a plurality of RAN nodes coordinate to assist the terminal device in implementing wireless access, and different RAN nodes each implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different communication systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

It should be understood that quantities of devices in the communication system are merely used as examples, and are not limited thereto. During actual application, the communication system may further include more terminal devices and more RAN devices, or may further include another device.

It should be understood that FIG. 1 is a simplified diagram provided as an example for ease of understanding, and the communication system may further include more network devices or terminal devices. In addition, embodiments of this application are applicable to any communication scenario in which a transmit end device communicates with a receive end device.

For ease of understanding embodiments of this application, the following first briefly describes terms in embodiments of this application.
1. Sensing: In the field of integrated sensing and communication, sensing refers to obtaining of surrounding environment information through a sensing network, for example, target localization, target imaging, target detection, and target tracking. Sensing information may be used for optimization and improvement of a communication system, for example, avoiding an obstacle and improving communication quality. Sensing may be further used for channel modeling and signal analysis of a wireless communication system, to better understand and optimize communication performance.
2. Self-sensing: In embodiments of this application, self-sensing means that sensing measurement on a sensing target is implemented by receiving a self-sent sensing signal. For example, in wireless communication, self-sensing may include sensing of a wireless channel, sensing of transmit power, sensing of signal quality, and the like. For example, a transmit end transmits a sensing signal, and the sensing signal is received by the transmit end after being reflected by a sensing target. The transmit end may obtain a distance of the sensing target based on transmitting time and receiving time of the sensing signal. The self-sensing technology is applied in many fields, such as intelligent transportation, a smart city, and a smart home.
3. Transmit-receive separated sensing: In embodiments of this application, transmit-receive separated sensing means that two functions, that is, sending and receiving, are independently performed. Transmit-receive separated sensing can achieve better signal sending and receiving effect, and can also reduce system complexity and improve system stability. For example, a transmit-receive separated sensing system includes two parts: a transmit end and a receive end. The transmit end is responsible for transmitting a sensing signal, the sensing signal is received by the receive end after being reflected by a sensing target, and the receive end processes the sensing signal to obtain information about the sensing target. The transmit-receive separated sensing technology is applied in many fields, such as wireless communication, satellite communication, and radar. The technology can improve transmission efficiency and reliability of a communication system, and can also reduce complexity and costs of the system.
4. Sensing management function (sensing management function, SEMF): In the communication field, the SEMF is a sensing management functional block configured to manage a communication device. Alternatively, in the field of integrated sensing and communication, the SEMF is a sensing management functional block configured to manage a communication device or an integrated sensing and communication device. The SEMF is configured to: collect information about another functional block, entity, or device, for example, including a sensing requirement, a sensing measurement result, a sensing calculation result, a sensing capability feedback, a sensing assistance request, and a sensing resource allocation feedback; and perform a corresponding management operation, including delivering a command including sensing capability request, sensing assistance response, sensing signal configuration, sensing measurement reporting configuration, sensing result calculation, target classification, target identification, and the like to each functional block, entity, or device, interacting with the another functional entity or device by using a sensing protocol, a signaling channel, or a data channel, and the like. The sensing management function may be located in a core network, an access network, or a terminal device.

Positioning is one of sensing capabilities. 5G NR standardizes air interface positioning. A core network supports a location management function, which is configured to coordinate and schedule positioning-related resources, determine a target location, estimate a velocity and measurement precision of a measurement signal, and so on. The location management function is located in the core network, and can respond to a positioning requirement from an external entity or a UE. In addition, a UE in an RRC connected state or an RRC inactive (inactive) state needs to participate in positioning of the UE. For example, the UE needs to participate in signal receiving and/or sending. For example, the UE measures and reports a PRS sent by a base station, or the UE sends a sounding reference signal (sounding reference signal, SRS) to the base station for measurement.

Currently, an existing sensing procedure (for example, a positioning procedure) requires a large amount of interaction between a network device and a terminal device. For example, the network device sends a PRS to the terminal device, and the terminal device measures the positioning reference signal and reports a measurement result of the PRS to the network device. However, the foregoing procedure cannot support the terminal device in independently completing a sensing task.

In view of this, this application provides a sensing method, a communication apparatus, and a system, to support a terminal device in independently completing a sensing task (or may be referred to as a self-sensing task).

The following describes the sensing method, the communication apparatus, and the system in embodiments of this application with reference to the accompanying drawings.

For ease of understanding and description, the following describes the sensing method in embodiments of this application by using interaction between a first apparatus and a second apparatus as an example. However, this shall not constitute any limitation on an execution body of the sensing method in embodiments of this application. For example, a method performed by the first apparatus may alternatively be performed by a module (for example, a circuit, a chip, or a chip system) of the first apparatus, or may be implemented by a logical node, a logical module, or software that can implement all or some functions of the first apparatus. A method performed by the second apparatus may alternatively be performed by a module (for example, a circuit, a chip, or a chip system) of the second apparatus, or may be implemented by a logical node, a logical module, or software that can implement all or some functions of the second apparatus.

The foregoing apparatus may alternatively be a device, a communication apparatus, a communication device, a component or a chip in the device, or the like. For example, the first apparatus may be a first device, a first communication apparatus, a first communication device, a first component, a first chip, or the like; and the second apparatus may be a second device, a second communication apparatus, a second communication device, a second component, a second chip, or the like.

The first apparatus may be a terminal device, and the second apparatus may be a terminal device or a network device. When both the first apparatus and the second apparatus are terminal devices, communication between the first apparatus and the second apparatus is sidelink (sidelink, SL) communication. When the first apparatus is a terminal device, and the second apparatus is a network device, communication between the first apparatus and the second apparatus is air interface communication or Uu interface communication.

In conclusion, the following describes the sensing method in embodiments of this application by using the first apparatus and the second apparatus as an example, but does not limit a device or an apparatus (for example, a terminal device or a network device) corresponding to each of the first apparatus and the second apparatus.

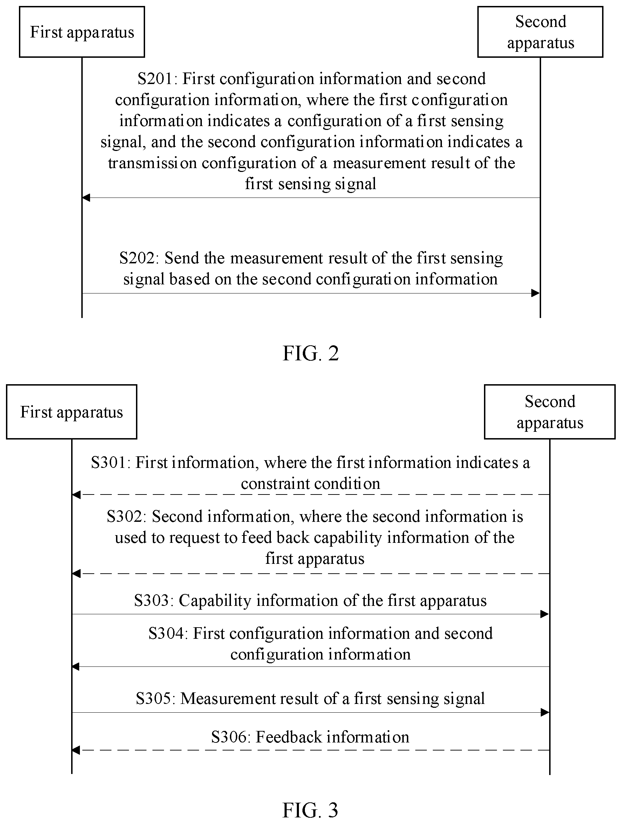

FIG. 2 is an interaction flowchart of a sensing method according to an embodiment of this application. As shown inFIG. 2, the method includes the following steps.

S201: A second apparatus sends first configuration information and second configuration information to a first apparatus.

Correspondingly, the first apparatus receives the first configuration information and the second configuration information.

The first configuration information indicates a configuration of a first sensing signal, and the second configuration information indicates a transmission configuration of a measurement result of the first sensing signal.

The first sensing signal is a signal sent and received by the first apparatus. For example, the first apparatus sends the first sensing signal to a sensing target, the sensing target reflects the first sensing signal, and the first apparatus receives the first sensing signal reflected by the sensing target. In this way, the first apparatus sends the first sensing signal to the sensing target and receives the first sensing signal reflected by the sensing target, so that information about the sensing target, for example, a moving velocity or orientation information of the sensing target, can be obtained.

The first configuration information and the second configuration information may be carried in a same piece of information, or may be carried in different pieces of information. This is not limited.

In a possible implementation, that the first configuration information indicates the configuration of the first sensing signal may be:

The first configuration information is used to configure transmission of the first sensing signal. For example, the first configuration information is used to configure sending and receiving of the first sensing signal. The first apparatus may send and receive the first sensing signal based on the first configuration information.

Alternatively, the first configuration information is used to configure communication of the first sensing signal. The first apparatus may perform communication of the first sensing signal based on the first configuration information. For example, the first apparatus may send the first sensing signal to the sensing target based on the first configuration information, and receive, based on the first configuration information, a signal obtained after the sensing target reflects the first sensing signal.

In conclusion, the first apparatus may complete self-sending and self-receiving of the first sensing signal based on the first configuration information.

In another possible implementation, that the second configuration information indicates the transmission configuration of the measurement result of the first sensing signal may be:

The second configuration information is used to configure transmission of the measurement result of the first sensing signal. For example, the second configuration information is used to configure sending of the measurement result of the first sensing signal. The first apparatus may report or send the measurement result of the first sensing signal based on the second configuration information. For example, the first apparatus may send, report, or feed back the measurement result of the first sensing signal to the second apparatus based on the second configuration information.

Alternatively, the second configuration information is used to configure reporting of the measurement result of the first sensing signal. For example, the first apparatus may report the measurement result of the first sensing signal based on the second configuration information.

Alternatively, the second configuration information is used to configure a communication configuration of the measurement result of the first sensing signal. For example, the first apparatus may complete communication, reporting, feedback, interaction, or the like of the measurement result of the first sensing signal with the second apparatus based on the second configuration information.

Alternatively, the second configuration information may be further used to configure a feedback resource corresponding to a preamble. The second configuration information may include a configuration of a feedback resource corresponding to one or more preambles. For example, the second configuration information includes a plurality of preambles and a resource configuration of a physical uplink shared channel (physical uplink shared channel, PUSCH) of each of the plurality of preambles. After obtaining the configuration information, the first apparatus may find, based on a preamble used by the first apparatus, a corresponding feedback resource for reporting the measurement result.

The second configuration information also includes capability response information for more than one first apparatus, instead of notifying each first apparatus one by one. This can reduce signaling overheads. The first apparatus may obtain the feedback resource based on a preamble used when the first apparatus performs capability reporting, instead of continuing to perform blind selection in a resource pool. This can reduce a resource collision probability, and can further improve reliability of reporting the measurement result.

In conclusion, the first apparatus may complete reporting or feedback of the measurement result of the first sensing signal based on the second configuration information.

In a possible implementation, the second configuration information may include resource configuration information used to transmit the measurement result of the first sensing signal. For example, the resource configuration information may include one or more of a time-frequency resource, a sequence resource, a modulation and coding scheme (modulation and coding scheme, MCS) indication, and the like used to transmit the measurement result of the first sensing signal. In this way, the first apparatus may complete sending or reporting of the measurement result of the first sensing signal based on the second configuration information.

The first configuration information and the second configuration information may be configured by the second apparatus (or may be another apparatus, for example, an SEMF located in a core network, which is not limited) for the first apparatus. For example, in a unicast scenario, the second apparatus communicates with the first apparatus; and the second apparatus configures, for the first apparatus, configuration information used to complete a sensing task, for example, the first configuration information and the second configuration information. In a broadcast scenario, the second apparatus communicates with a plurality of first apparatuses; the second apparatus configures, for some or all of the plurality of first apparatuses, corresponding configuration information used to complete sensing tasks, for example, configures corresponding first configuration information and second configuration information for the some or all of the first apparatuses; and the some or all of the first apparatuses may complete the sensing tasks based on the respective first configuration information and second configuration information. For another example, in a multicast scenario, the second apparatus communicates with first apparatuses in an apparatus group; the second apparatus may configure, for some or all first apparatuses in the apparatus group, corresponding configuration information used to complete sensing tasks; and the some or all first apparatuses in the apparatus group may complete the sensing tasks based on the corresponding configuration information.

For ease of description, the following does not distinguish whether a communication scenario between the first apparatus and the second apparatus is the unicast scenario, the broadcast scenario, or the multicast scenario, and the first apparatus may obtain the corresponding first configuration information and second configuration information, to complete the sensing task.

In a possible implementation, the measurement result of the first sensing signal is associated with a measurement method (or manner) of the first sensing signal by the first apparatus. Descriptions are provided below.

For example, the first apparatus measures the first sensing signal by using a first measurement method, to obtain a measurement result corresponding to the first measurement method.

For example, the first apparatus measures the first sensing signal by using a second measurement method, to obtain a measurement result corresponding to the second measurement method.

For example, the first apparatus measures the first sensing signal by using a third measurement method, to obtain a measurement result corresponding to the third measurement method.

For example, the first measurement method is a round trip time (round trip time, RTT) measurement method:

The first apparatus detects the reflected first sensing signal in a sensing receiving window. When received signal strength of the received reflected first sensing signal is greater than a threshold (a specific value is not limited), the first apparatus may determine a time difference between sending time and receiving time of the first sensing signal, to obtain an RTT value of the first sensing signal.

For example, the second measurement method is an angle measurement method:

To sense a specific direction range, a sensing angle needs to be configured, and an angle of a transmit beam and an angle of a receive beam need to be configured. Considering that the transmit beam and the receive beam have reciprocity, a receive beam of the first sensing signal may be determined by configuring only a transmit beam of the first sensing signal. The first apparatus detects the reflected first sensing signal in a sensing receiving window. When received signal strength of the received reflected first sensing signal is greater than a threshold (a specific value of the threshold is not limited, and may be configured based on a situation), it indicates that there is a target in a direction of the receive beam.

Correspondingly, the first apparatus may determine an angle of the receive beam of the first sensing signal, to determine an approximate orientation of the target. That beams of signals have reciprocity may also be understood as that there is a spatial relationship (spatial relation) between the beams of the signals or there is a spatial relationship between the signals. A spatial relationship of a beam may be determined based on another beam, or a spatial relationship of a signal may be determined based on another signal. For example, a beam A and a beam B have beam reciprocity, indicating that a spatial relationship of the beam A may be determined based on the beam B (for example, beam information of the beam B). For example, there is a spatial relationship between a signal A and a signal B, in other words, a spatial relationship of the signal B may be obtained based on the signal A.

In embodiments of this application, that the transmit beam and the receive beam have reciprocity, that a beam is determined based on another beam, that a spatial relationship of a signal is determined based on another signal, that a spatial relationship of a signal is determined based on a spatial relationship of another signal, that a spatial feature of a signal is determined based on a spatial feature of another signal, or that a spatial filter of a signal is determined based on a spatial filter of another signal may mean that a spatial relationship (or a spatial feature or a spatial filter) of a sent signal is determined based on a received signal, or a spatial relationship (or a spatial feature or a spatial filter) of a received signal is determined based on a sent signal. Alternatively, a spatial relationship (or a spatial feature or a spatial filter) of a sent signal may be determined based on a spatial relationship (or a spatial feature or a spatial filter) of a received signal, or a spatial relationship (or a spatial feature or a spatial filter) of a received signal may be determined based on a spatial relationship (or a spatial feature or a spatial filter) of a sent signal. Alternatively, the transmit beam may be determined based on the receive beam, or the receive beam may be determined based on the transmit beam.

For example, the third measurement method is a Doppler measurement method:

To obtain the moving velocity of the target, the Doppler measurement method may be configured. When received signal strength of the received reflected first sensing signal is greater than a threshold (a specific value of the threshold is not limited, and may be configured based on a situation), the first apparatus may obtain information such as a Doppler shift value or a velocity value of the sensing target by sending and receiving the first sensing signal.

In addition, the measurement method of the first sensing signal may be predefined, autonomously selected, reported by the first apparatus to the second apparatus, or indicated.

For example, the measurement method of the first sensing signal is predefined, and the first apparatus may measure the first sensing signal according to the predefined measurement method, to obtain the corresponding measurement result.

For example, the measurement method of the first sensing signal is autonomously selected, and the first apparatus may autonomously select the measurement method based on a received sensing requirement to measure the first sensing signal, to obtain the corresponding measurement result.

In some embodiments, when reporting the measurement result, the first apparatus may indirectly indicate the measurement method by reporting the corresponding measurement result, or optionally, may report the used measurement method together with the measurement result. Alternatively, the first apparatus may separately report the measurement result and the used measurement method.

For example, the measurement method of the first sensing signal is reported by the first apparatus to the second apparatus (for example, the first apparatus reports to the second apparatus that the first apparatus supports the first measurement method, and the second apparatus may determine that the first apparatus uses the first measurement method to measure the first sensing signal), and the first apparatus may measure the first sensing signal according to the reported measurement method of the first sensing signal, to obtain the corresponding measurement result.

For example, the measurement method of the first sensing signal is indicated. For example, the second apparatus further sends third configuration information to the first apparatus, where the third configuration information indicates the measurement method of the first sensing signal. The first apparatus may measure the first sensing signal according to the measurement method that is of the first sensing signal and that is indicated by the third configuration information, to obtain the corresponding measurement result.

In a possible implementation, the measurement result of the first sensing signal includes at least one of the following:
a transmission resource identifier;
received signal strength;
received signal strength of each multipath component;
a time difference between sending time and receiving time;
a receiving timestamp; and
a difference between the receiving timestamp and a receiving timestamp of a second sensing signal, where the second sensing signal is a signal sent by the second apparatus to the first apparatus.

The transmission resource identifier indicates a transmission resource used to transmit the first sensing signal. For example, the first apparatus may transmit the first sensing signal based on the transmission resource indicated by the transmission resource identifier. The second apparatus may determine, based on the transmission resource identifier reported by the first apparatus, a transmission resource corresponding to the measurement result of the first sensing signal.

When the second apparatus separately configures, for different first apparatuses, resources used for sensing signal transmission, by reporting transmission resource identifiers, the second apparatus may distinguish a first apparatus corresponding to each sensing signal, and may not confuse a correspondence between a transmit end of a measurement result of a sensing signal and the measurement result of the sensing signal.

The received signal strength indicates strength of the reflected first sensing signal received by the first apparatus, and may be represented by using reference signal received power (reference signal received power, RSRP), but is not limited to being represented by using another possible term in the future.

The received signal strength of each multipath component is received signal strength corresponding to each path when the first apparatus receives the reflected first sensing signal through a plurality of paths. In this way, signals that are reflected by the sensing target and that correspond to the plurality of paths can be obtained.

It should be noted that the signals that are reflected by the sensing target and that correspond to the plurality of paths may come from a plurality of different sensing targets, which facilitates multi-sensing-target sensing. If the signals that are reflected by the sensing target and that correspond to the plurality of paths come from a same sensing target, this facilitates accurate sensing of a location of the sensing target.

The time difference between the sending time and the receiving time indicates a difference between sending time of the first sensing signal and receiving time of the first sensing signal, and may be absolute time.

The receiving timestamp indicates a timestamp when the first apparatus receives the first sensing signal. The receiving timestamp may represent time at which measurement occurs, and reflect time corresponding to a measurement result obtained through the measurement. This helps track the sensing target based on time.

The difference between the receiving timestamp and the receiving timestamp of the second sensing signal indicates a time difference between the receiving timestamp and the receiving timestamp of the second sensing signal. The receiving timestamp of the second sensing signal (which is the sensing signal sent by the second apparatus to the first apparatus) and the time difference thereof may be reported to reduce reporting overheads, and it is ensured that a receive end can obtain the two timestamps.

In a possible implementation, the measurement result of the first sensing signal may further include at least one of the following: a sending timing error group (timing error group, TEG) identifier, a receiving TEG identifier, and a sending and receiving TEG identifier, where the "sending and receiving TEG identifier" indicates an identifier of a TEG formed by a sending timing error and a receiving timing error.

The TEG identifier is reported, so that the second apparatus may obtain which results reported by the first apparatus belong to a same TEG and which results belong to different TEGs. Results with a same TEG identifier belong to a same error group or a same error range. With such an identifier, the second apparatus may separately process the results based on the TEG identifier. This helps improve accuracy of the measurement result.

The foregoing descriptions of the measurement result of the first sensing signal may correspond to the first measurement method, may correspond to the second measurement method, or may correspond to the third measurement method. For example, when the third measurement method is used to measure the first sensing signal, the measurement result that is of the first sensing signal and that corresponds to the third measurement method may also include at least one of the foregoing content; and when the second measurement method is used to measure the first sensing signal, the measurement result that is of the first sensing signal and that corresponds to the second measurement method may also include at least one of the foregoing content.

In a possible implementation, the measurement result of the first sensing signal includes at least one of the following:
a transmission resource identifier;
a transmit beam;
a receive beam;
received signal strength;
received signal strength of each multipath component; and
a receiving timestamp.

The transmit beam is a beam used by the first apparatus to send the first sensing signal, and the receive beam is a beam used by the first apparatus to receive the first sensing signal. The second apparatus may determine the orientation information of the target by reporting the transmit beam or the receive beam. For descriptions of the transmission resource identifier, the received signal strength, the received signal strength of each multipath component, and the receiving timestamp, refer to the foregoing descriptions. Details are not described again.

The foregoing descriptions of the measurement result of the first sensing signal may correspond to the second measurement method, may correspond to the first measurement method, or may correspond to the third measurement method. For example, when the first measurement method is used to measure the first sensing signal, the measurement result that is of the first sensing signal and that corresponds to the first measurement method may also include at least one of the foregoing content; and when the third measurement method is used to measure the first sensing signal, the measurement result that is of the first sensing signal and that corresponds to the third measurement method may also include at least one of the foregoing content.

In a possible implementation, the measurement result of the first sensing signal includes at least one of the following:
a transmission resource identifier;
a Doppler shift value obtained based on the first sensing signal;
a velocity value that is of the sensing target and that is obtained based on the first sensing signal; and
a receiving timestamp.

The Doppler shift value obtained based on the first sensing signal may indicate the moving velocity of the sensing target, and may be obtained by comparing a frequency difference between the sent first sensing signal and the received first sensing signal.

The moving velocity that is of the sensing target and that is obtained based on the first sensing signal may be obtained based on a Doppler frequency shift and a carrier wavelength (for example, F_{d}=2*v/lamda), where F_{d} is the Doppler frequency shift, v is the moving velocity, and lamda is the carrier wavelength.

The velocity value that is of the sensing target and that is obtained based on the first sensing signal may also indicate the moving velocity of the target. For descriptions of the transmission resource identifier and the receiving timestamp, refer to the foregoing descriptions. Details are not described again.

The foregoing descriptions of the measurement result of the first sensing signal may correspond to the third measurement method, may correspond to the second measurement method, or may correspond to the first measurement method. For example, when the first measurement method is used to measure the first sensing signal, the measurement result that is of the first sensing signal and that corresponds to the first measurement method may also include at least one of the foregoing content; and when the second measurement method is used to measure the first sensing signal, the measurement result that is of the first sensing signal and that corresponds to the second measurement method may also include at least one of the foregoing content.

In a possible implementation, the first measurement method, the second measurement method, and the third measurement method may be combined. For example, the first apparatus measures the first sensing signal by using the first measurement method and the second measurement method, the first apparatus measures the first sensing signal by using the second measurement method and the third measurement method, or the first apparatus measures the first sensing signal by using the first measurement method, the second measurement method, and the third measurement method. Correspondingly, the measurement result obtained by the first apparatus by measuring the first sensing signal is associated with the measurement method used by the first apparatus.

S202: The first apparatus sends the measurement result of the first sensing signal to the second apparatus.

Correspondingly, the second apparatus receives the measurement result of the first sensing signal.

For example, the first apparatus completes self-sending and self-receiving of the first sensing signal based on the first configuration information, measures the first sensing signal (for descriptions of the measurement method, refer to the foregoing descriptions) to obtain the measurement result of the first sensing signal, and sends the measurement result of the first sensing signal to the second apparatus based on the second configuration information.

Correspondingly, the second apparatus processes the measurement result of the first sensing signal.

In conclusion, the first apparatus may independently complete the sensing task based on sensing signal-related configuration information (including transmission of the sensing signal and transmission of the measurement result of the sensing signal) sent by the second apparatus.

In addition, a large amount of signaling exchange is not required between the first apparatus and the second apparatus, so that signaling exchange overheads for completing the sensing task between the first apparatus and the second apparatus can be reduced.

In a possible implementation, the first apparatus may not send the measurement result of the first sensing signal to the second apparatus. For example, the first apparatus may first process the measurement result of the first sensing signal, and then send, to the second apparatus, information obtained by the first apparatus by processing the measurement result of the first sensing signal. In this way, feedback signaling overheads and processing power consumption of the second apparatus can be reduced.

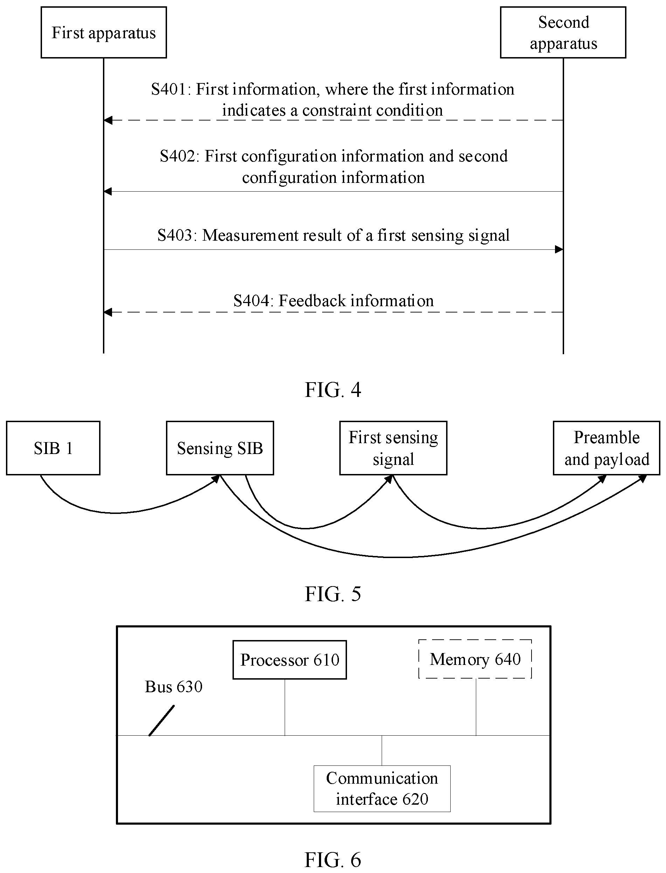

The following further describes the method in FIG. 2 with reference to FIG. 3 and FIG. 4.

FIG. 3 is an interaction flowchart of another sensing method according to an embodiment of this application. As shown in FIG. 3, the method includes the following steps.

Optionally, in S301, a second apparatus sends first information to a first apparatus.

Correspondingly, the first apparatus receives the first information.

The first information indicates a constraint condition, and an apparatus (the first apparatus is used as an example for description) that meets the constraint condition performs at least one of sensing measurement and capability reporting.

For example, the apparatus that meets the constraint condition performs sensing measurement.

For example, the apparatus that meets the constraint condition performs capability reporting.

For example, the apparatus that meets the constraint condition performs sensing measurement and capability reporting.

That the apparatus performs sensing measurement may be: After the apparatus completes capability reporting (a capability related to a sensing signal, which may be referred to as a sensing capability), the apparatus performs sensing measurement. Alternatively, the apparatus performs sensing measurement without a need to report a capability. The sensing measurement may be participating in performing sensing or the like.

That the apparatus performs capability reporting may be: After determining that the constraint condition is met, the apparatus reports, to the second apparatus, a capability (briefly referred to as a capability (or a sensing capability) below) related to transmission and/or measurement of a sensing signal.

For ease of description, an example in which the apparatus that meets the constraint condition performs capability reporting is used below for description, but an application scenario in which the apparatus that meets the constraint condition performs sensing measurement is not limited.

The first information may be carried in system information, or the first information may be system information. In this way, the constraint condition information can be broadcast to apparatuses in different RRC states, and as many apparatuses that meet the constraint condition as possible are enabled to perform capability reporting.

In a possible implementation, the constraint condition includes at least one of the following:
received signal strength, a bandwidth capability, a geographic location range, a beam range, a duplex capability type, a measurement method (or a sensing method), beam reciprocity, a maximum quantity of antenna ports, a velocity range, and an apparatus type.

For example, an apparatus for which received signal strength of a received specific signal is higher than a specific threshold is required to perform at least one of sensing measurement and capability reporting. The specific signal may be a downlink signal or a sidelink signal, and this is not limited. The received signal strength is required to be greater than a specific value, so that only an apparatus with good channel quality participates in sensing measurement. Therefore, reliability of measurement result reporting is ensured, and precision of a measurement result can be ensured.

For example, an apparatus that supports a specific bandwidth is required to perform at least one of sensing measurement and capability reporting. For example, an apparatus that can support a bandwidth greater than 10 M is required to perform at least one of sensing measurement and capability reporting. The apparatus is required to support a bandwidth greater than a specific value, to meet a requirement of time resolution or distance resolution. The bandwidth capability may indicate a bandwidth that can be supported by the apparatus and that is used for sensing signal transmission.

For example, an apparatus in a specific geographic location range is required to perform at least one of sensing measurement and capability reporting. An apparatus in a specific geographic range is required to participate in sensing measurement, so that a sensing requirement can be met. For example, the second apparatus needs to sense a specific geographic area, and the second apparatus may communicate with a first apparatus in the specific area, so that the first apparatus in the specific area can complete a sensing task, and therefore assist the second apparatus in completing sensing of the specific area.

For example, an apparatus in a specific beam range is required to perform at least one of sensing measurement and capability reporting. The apparatus in the specific beam range is required to participate in sensing measurement, so that a sensing requirement can be met. For example, the second apparatus needs to sense an area corresponding to a specific angle range, and the second apparatus may communicate with a first apparatus in the specific angle range, so that the first apparatus in the specific angle range can complete a sensing task, and therefore assist the second apparatus in completing sensing of the area corresponding to the specific angle range.

For example, an apparatus that meets a specific duplex capability is required to perform at least one of sensing measurement and capability reporting. A duplex mode (which may also be referred to as a sensing duplex mode) includes a half-duplex mode and a full-duplex mode. The second apparatus obtains a duplex capability of the first apparatus. This helps the second apparatus configure a time range of a sensing receiving window of the first apparatus in a targeted manner. In addition, this helps the second apparatus determine minimum sensible measurement distances corresponding to different duplex modes of the first apparatus.

For example, an apparatus that supports a specific measurement method is required to perform at least one of sensing measurement and capability reporting. In this way, the second apparatus may perform sensing measurement configuration of a sensing signal with reference to a sensing requirement and a measurement method that can be supported by the first apparatus. For example, the first apparatus supports an angle-based measurement method, and the angle-based method is insensitive to a bandwidth, so that the second apparatus may configure a small sensing signal bandwidth for the first apparatus to perform angle measurement reporting, to meet the sensing requirement.

For example, an apparatus that meets beam reciprocity is required to perform at least one of sensing measurement and capability reporting. In this way, the second apparatus may complete configuration of a receive beam or a transmit beam by configuring only a transmit beam or a receive beam of the first apparatus, that is, configure a transmit-receive beam pair of the first apparatus. This helps reduce signaling overheads. Then, the first apparatus performs measurement reporting on a transmitted sensing signal based on the transmit-receive beam pair.

For example, an apparatus whose maximum quantity of antenna ports is greater than a threshold is required to perform at least one of sensing measurement and capability reporting. In this way, the second apparatus may configure a time-frequency transmission resource of the corresponding sensing signal to perform sensing measurement and reporting.

For example, an apparatus that meets a specific velocity range is required to perform at least one of sensing measurement and capability reporting. The apparatus in the specific velocity range is required to participate in sensing measurement, so that a sensing requirement can be met. The sensing requirement may include one or more of a distance, a velocity, an angle, a corresponding precision requirement, resolution requirement, and confidence requirement, detection accuracy, a miss detection probability, a false alarm probability, a delay requirement, and the like.

For example, an apparatus that meets a specific apparatus type is required to perform at least one of sensing measurement and capability reporting. The apparatus type includes a UE, a relay device, a base station, a sensor, and the like.

The apparatus type may include a device in a low power consumption state, for example, a UE in an RRC idle state, a UE in an RRC inactive state, or a low power consumption UE in a connected state. The apparatus that meets the specific apparatus type performs at least one of sensing measurement and capability reporting, so that the second apparatus may configure a corresponding sensing signal for a corresponding first apparatus, to enable the apparatus of the specific apparatus type to participate in sensing collaboration with low power consumption and low overheads. Therefore, a sensing task requirement of the second apparatus is met.

In conclusion, the apparatus that meets the constraint condition is limited to performing at least one of sensing measurement and capability reporting, which helps reduce interference between different apparatuses. In other words, the constraint condition is configured, so that in this embodiment of this application, a resource conflict that occurs because a large quantity of apparatuses contend for resources when reporting measurement results and that therefore affects receiving of the measurement result of the sensing signal by the second apparatus can be avoided.

Optionally, in S302, the second apparatus sends second information to the first apparatus.

Correspondingly, the first apparatus receives the second information. The second information is used to request to feed back capability information of the first apparatus, and the capability information of the first apparatus indicates a capability that is of the first apparatus and that is associated with a first sensing signal. For example, the capability that is of the first apparatus and that is associated with the first sensing signal may include one or more of a capability of sending the first sensing signal, a capability of receiving the first sensing signal, a capability of measuring the first sensing signal, a capability of sending a measurement result of the first sensing signal to the second apparatus, and the like. This is not limited herein.

The second information may be carried in system information, or the second information may be system information. In this way, capability request information may be broadcast to apparatuses in different RRC states, and as many apparatuses that meet the constraint condition as possible are enabled to perform capability reporting. Then, these apparatuses that report capabilities receive capability reporting response information, and perform sensing measurement reporting based on the capability reporting response information.

In a possible implementation, the capability information of the first apparatus includes at least one of the following:
a bandwidth capability, a duplex capability type, a measurement method, a beam reciprocity capability, and a maximum quantity of antenna ports.

The bandwidth capability may indicate a bandwidth in which the first apparatus supports sending and receiving of the first sensing signal.

In a possible implementation, the bandwidth capability may be indicated by configuring a plurality of values or intervals, for example, the bandwidth capability being less than B1, the bandwidth capability being greater than or equal to B1 and less than or equal to B2, the bandwidth capability being greater than B2 and less than or equal to B3, and the bandwidth capability being greater than B3, for the first apparatus to select and feed back.

The first apparatus may directly feed back an index value corresponding to a corresponding interval. For example, two bits are used for indication. For example, bits 00 indicate that a bandwidth (or the bandwidth capability) supported by the first apparatus is less than B1, bits 01 indicate that the bandwidth (or the bandwidth capability) supported by the first apparatus is greater than or equal to B1 and less than or equal to B2, bits 10 indicate that the bandwidth (or the bandwidth capability) supported by the first apparatus is greater than B2 and less than or equal to B3, and bits 11 indicates that the bandwidth (or the bandwidth capability) supported by the first apparatus is greater than B3. When use of a payload (payload) to carry the capability information of the first apparatus is considered, the first apparatus may also send a maximum bandwidth that can be supported by the first apparatus separately or together with the capability information.

In a possible implementation, the duplex capability type includes a full-duplex capability and a half-duplex capability. The duplex capability type may reflect a capability of the first apparatus to perform full-duplex sensing or half-duplex sensing, and can affect a distance range in which the first apparatus performs sensing. The first apparatus may feed back whether the first apparatus supports the full-duplex capability or the half-duplex capability. A duplex capability of the first apparatus is reported, so that the second apparatus may configure a time range of a sensing receiving window of the first apparatus in a targeted manner. In addition, this helps the second apparatus determine minimum sensible measurement distances corresponding to different duplex modes of the first apparatus.

For descriptions of the measurement method, refer to the foregoing descriptions of the first measurement method, the second measurement method, and the third measurement method. Details are not described again. The measurement method supported by the first apparatus is reported, so that the second apparatus may perform sensing measurement configuration of the sensing signal with reference to a sensing requirement and the measurement method that can be supported by the first apparatus. For example, the first apparatus supports an angle-based measurement method, and the angle-based method is insensitive to a bandwidth, so that the second apparatus may configure a small sensing signal bandwidth for the first apparatus to perform angle measurement reporting, to meet the sensing requirement.

The beam reciprocity capability indicates an association between a transmit beam and a receive beam. For example, the receive beam may be determined based on the transmit beam, or the transmit beam may be determined based on the receive beam. The first apparatus may feed back whether there is reciprocity between the transmit beam and the receive beam of the first apparatus. Capability information of beam reciprocity of the first apparatus is reported, so that if the first apparatus supports beam reciprocity, the second apparatus may complete configuration of a receive beam or a transmit beam by configuring only the transmit beam or the receive beam of the first apparatus, that is, configure a transmit-receive beam pair of the first apparatus. This helps reduce signaling overheads. Then, the first apparatus performs measurement reporting on a transmitted sensing signal based on the transmit-receive beam pair.

The maximum quantity of antenna ports affects a resource that is configured by a network and that is used for transmission of each antenna port. The maximum quantity of antenna ports may include one or more of a quantity of code division ports, a quantity of frequency division ports, a quantity of time division ports, a maximum quantity of antenna ports, and the like, so that a scanning speed can be improved through multi-port scanning. The maximum quantity of antenna ports supported by the first apparatus is reported, so that the second apparatus may configure a time-frequency transmission resource of the corresponding sensing signal to perform sensing measurement reporting.

It should be noted that the first information and the second information may be carried in a same piece of information or a same message, for example, system information (system information, SI) (or sensing system information, which is not limited), or may be carried in different pieces of information. When the first information and the second information are carried in different pieces of information, the first information and the second information may be sent simultaneously, or may not be sent simultaneously (for example, the first information is sent before or after the second information). This is not limited.

Optionally, in S303, the first apparatus sends the capability information of the first apparatus to the second apparatus.

Correspondingly, the second apparatus receives the capability information of the first apparatus.

The first apparatus determines, based on whether the constraint condition is met, whether to report the capability information of the first apparatus to the second apparatus. If the constraint condition is met, the first apparatus sends the capability information of the first apparatus to the second apparatus. If the constraint condition is not met, the first apparatus does not send the capability information of the first apparatus to the second apparatus.

The capability information of the first apparatus can be used by the second apparatus to configure corresponding first configuration information and second configuration information for the first apparatus based on the capability of the first apparatus, so that the first apparatus can better complete a sensing task within a capability range of the first apparatus.

In a possible implementation, that the first apparatus sends the capability information of the first apparatus to the second apparatus includes:

The first apparatus sends the capability information of the first apparatus to the second apparatus by using a preamble and a payload. For example, the first apparatus randomly selects a preamble from a preamble resource pool configured by the second apparatus and determines a channel corresponding to the preamble, to send the capability information of the first apparatus to the second apparatus, where the channel carries a payload used to carry the capability information of the first apparatus, and the preamble is used to distinguish between different first apparatuses.

Alternatively, the first apparatus sends the capability information of the first apparatus to the second apparatus by using a preamble. For example, when less information is required to indicate the capability information of the first apparatus, the first apparatus may select, from a preamble resource pool based on a predefined or preconfigured correspondence between a preamble and a capability, a preamble that matches the capability of the first apparatus, to send the capability information of the first apparatus to the second apparatus. A quantity of preambles that match the capability information may be greater than one, so that a conflict caused when different first apparatuses select a same preamble can be reduced.

If the first apparatus is a device in a non-connected state, the first apparatus may send the capability information of the first apparatus by using the preamble and the payload, or the first apparatus may send the capability information of the first apparatus by using the preamble. This can reduce a delay and signaling exchange overheads.

If the first apparatus is a device in a connected state, the first apparatus may alternatively send the capability information of the first apparatus to the second apparatus by using an uplink, a sidelink, or the like. When the first apparatus sends the capability information of the first apparatus by using the preamble and the payload or by using the preamble, this can reduce a delay and signaling exchange overheads. In a possible implementation, after the first apparatus reports the capability information of the first apparatus to the second apparatus, the second apparatus may also determine that one or more specific first apparatuses do not participate in sensing measurement.

In another possible implementation, after the first apparatus reports the capability information to the second apparatus, the first apparatus may also choose not to participate in sensing measurement. This is not limited herein.

S304: The second apparatus sends the first configuration information and the second configuration information to the first apparatus.

Correspondingly, the first apparatus receives the first configuration information and the second configuration information.

For descriptions of the first configuration information and the second configuration information, refer to the foregoing descriptions of S201. Details are not described again.

After the first apparatus sends the capability information of the first apparatus to the second apparatus, the second apparatus sends capability reporting response information (for example, a sensing report response (sensing report response, SRR)) to the first apparatus, where the capability reporting response information is used to respond to the capability information sent by the first apparatus.

In a possible implementation, the first configuration information and/or the second configuration information may be carried in the capability reporting response information, or the first configuration information and/or the second configuration information may be the capability reporting response information. This is not limited herein. In this way, the apparatus that meets the constraint condition to perform capability reporting, rather than another apparatus, reads the response information to perform further sensing measurement reporting.

In another possible implementation, the first configuration information and/or the second configuration information may be carried in system information. In this way, apparatuses in various RRC states may all receive the information, so that the apparatus that meets the constraint condition can perform capability reporting or sensing measurement reporting based on the indication information.

The capability reporting response information may include physical layer control signaling and media access control (media access control, MAC) layer control signaling. The physical layer control signaling indicates some or all of a transmission resource configuration of a physical downlink shared channel (physical downlink shared channel, PDSCH), a configuration of the first sensing signal, a transmission configuration of the measurement result of the first sensing signal, and the like.

In some embodiments, the capability reporting response may be indicated by using control information. For example, the control information carries information indicating a resource configuration of a data channel, sending and receiving of the first sensing signal, and a sensing measurement method.

In some embodiments, downlink control information (downlink control information, DCI) in the physical layer control signaling carries information indicating the resource configuration of the PDSCH, sending and receiving of the first sensing signal, and the sensing measurement method.

In some embodiments, in the physical layer control signaling, first-level DCI indicates the resource configuration of the PDSCH and sending and receiving of the first sensing signal, and second-level DCI indicates the sensing measurement method.

For example, the first-level DCI may be carried on a physical downlink control channel (physical downlink control channel, PDCCH), and the second-level DCI may be carried on the PDSCH. A MAC control element (control element, CE) in the MAC layer control signaling may indicate a transmission resource configuration of the measurement result of the first sensing signal, and the transmission resource configuration includes one or more of a time-frequency resource location of a PUSCH, an MCS configuration of the PUSCH, and a timing advance configuration. The MAC CE is carried on the PDSCH for transmission.

The second apparatus obtains the capability information of the first apparatus, and may configure, for the first apparatus based on the capability information of the first apparatus, at least one of the first configuration information and the second configuration information that match the capability of the first apparatus.

For example, the first configuration information is associated with the capability of the first apparatus, and/or the second configuration information is associated with the capability of the first apparatus.

For example, the first configuration information is configured by the second apparatus based on the capability of the first apparatus, and/or the second configuration information is configured by the second apparatus based on the capability of the first apparatus.

For descriptions of an association relationship between the first configuration information and the capability of the first apparatus, refer to Table 1. For descriptions of an association relationship between the second configuration information and the capability of the first apparatus, refer to Table 2.

**Table 1**

| | |
|---|---|
| Parameter 1 | Bandwidth 1 |
| Parameter 2 | Bandwidth 2 |
| Parameter 3 | Bandwidth 3 |

For example, the first configuration information is used to configure the parameter 1, the parameter 2, and the parameter 3, the parameter 1 is associated with the bandwidth 1, the parameter 2 is associated with the bandwidth 2, and the parameter 3 is associated with the bandwidth 3. For example, the bandwidth 1 may be 10 M, the bandwidth 2 may be 15 M, and the bandwidth 3 may be 20 M.

With reference to Table 1, if the maximum bandwidth supported by the first apparatus is 10 M, the first apparatus selects the parameter 1 based on the bandwidth capability of the first apparatus; or if the maximum bandwidth supported by the first apparatus is 20 M, the first apparatus selects the parameter 3 based on the bandwidth capability of the first apparatus or selects any one of the parameter 1 to the parameter 3 according to a predefined rule.

The second apparatus may configure, based on bandwidth capabilities of different apparatuses, corresponding parameters used to transmit sensing signals, and the first apparatus may determine, based on the bandwidth capability of the first apparatus, an appropriate parameter used to transmit the first sensing signal, so that each apparatus can better perform a sensing task within a bandwidth range.

That the parameter is associated with the bandwidth is merely used as an example, and the parameter may alternatively be associated with more capabilities (such as the duplex capability type, the beam reciprocity capability, and the maximum quantity of antenna ports), such as the maximum quantity of antenna ports, the beam reciprocity capability, and the duplex capability type. For ease of description, in this embodiment of this application, an example in which the parameter configured by the first configuration information is associated with the bandwidth is used for description, but another scenario is not limited.

In a possible implementation, the second apparatus may configure a plurality of pieces of configuration information based on capabilities of a plurality of first apparatuses, or may configure one piece of configuration information based on capabilities of a plurality of first apparatuses. The one piece of configuration information includes a plurality of parameters, and the plurality of parameters are associated with the capabilities of the plurality of first apparatuses.

For example, the parameter 1 is associated with a bandwidth capability of an apparatus 1, the parameter 2 is associated with a bandwidth capability of an apparatus 2, and the parameter 3 is associated with a bandwidth capability of an apparatus 3. In this way, the first apparatus may determine a corresponding parameter based on the bandwidth capability of the first apparatus, and may transmit the sensing signal based on the parameter.

**Table 2**

| | |
|---|---|
| Resource 1 | Bandwidth 1 |
| Resource 2 | Bandwidth 2 |
| Resource 3 | Bandwidth 3 |

For example, the second configuration information is used to configure the resource 1, the resource 2, and the resource 3, the resource 1 is associated with the bandwidth 1, the resource 2 is associated with the bandwidth 2, and the resource 3 is associated with the bandwidth 3. For example, the bandwidth 1 may be 10 M, the bandwidth 2 may be 15 M, and the bandwidth 3 may be 20 M.

With reference to Table 2, if the maximum bandwidth supported by the first apparatus is 10 M, the first apparatus selects the resource 1 based on the bandwidth capability of the first apparatus; or if the maximum bandwidth supported by the first apparatus is 20 M, the first apparatus selects the resource 3 based on the bandwidth capability of the first apparatus or selects any one of the resource 1 to the resource 3 according to a predefined rule.

That the resource is associated with the bandwidth is merely used as an example, and the resource may alternatively be associated with more capabilities, such as the maximum quantity of antenna ports, the beam reciprocity capability, and the duplex capability type. This is not limited herein. For ease of description, in this embodiment of this application, an example in which the resource configured by the second configuration information is associated with the bandwidth capability is used for description, but another scenario is not limited.

The second apparatus may configure, based on different parameters used to transmit sensing signals, one or more resources used to transmit measurement results of sensing signals, so that different apparatuses can select different resources during resource selection. This avoids a resource conflict.

In addition, because a first parameter is associated with a first resource, when the first apparatus sends the measurement result of the first sensing signal to the second apparatus by using the first resource, the second apparatus may determine, based on the first resource, the first parameter selected by the first apparatus, so that the first apparatus does not need to report, to the second apparatus, a parameter selected by the first apparatus for transmitting the first sensing signal. This reduces signaling exchange overheads.

It should be noted that a plurality of resources such as an orthogonal time domain resource, frequency domain resource, and code domain resource (or sequence), or a quasi-orthogonal code domain resource (or sequence) may be configured for sensing signals of a same bandwidth. After selecting a bandwidth, the first apparatus may randomly select, for example, a sensing signal sequence from a resource pool corresponding to the bandwidth for transmission, to reduce a collision probability during sensing signal transmission. For example, a plurality of sequences with a same length in a sensing signal resource pool correspond to a same bandwidth and are configured on a same time-frequency resource. The sequences with the same length may be orthogonal sequences, for example, having a same ZC sequence root but different cyclic shifts; or may be ZC sequences that are with a same length and that have different roots, that is, quasi-orthogonal sequences. Using orthogonal time-frequency resources or orthogonal sequences can provide better performance, because mutual interference between sequences is avoided. Quasi-orthogonal sequences have slightly worse performance due to minor interference between the sequences. A plurality of sequences having different time-frequency resources, or orthogonal sequence resources, or a plurality of quasi-orthogonal sequences are configured, so that a plurality of apparatuses can be supported in performing random sequence selection. In this way, a collision probability is reduced, and detection performance is improved.

In a possible implementation, the second apparatus may configure a plurality of pieces of configuration information based on capabilities of a plurality of first apparatuses, or configure one piece of configuration information based on capabilities of a plurality of first apparatuses. The configuration information includes a plurality of resources, and the plurality of resources are associated with the capabilities of the plurality of first apparatuses.

For example, the resource 1 is associated with a bandwidth capability of an apparatus 1, the resource 2 is associated with a bandwidth capability of an apparatus 2, and the resource 3 is associated with a bandwidth capability of an apparatus 3. In this way, the first apparatus may determine a corresponding resource based on the bandwidth capability of the first apparatus, and may transmit the measurement result of the sensing signal based on the resource.

In a possible implementation, the first apparatus may determine a second resource based on the bandwidth capability of the first apparatus, where the second configuration information is used to configure at least one resource, and the at least one resource includes the second resource; and the first apparatus sends the measurement result of the first sensing signal by using the second resource.

The first apparatus sends the measurement result of the first sensing signal by using the second resource corresponding to the bandwidth capability, so that the second apparatus obtains, by using the second resource, a bandwidth corresponding to the measurement result of the first sensing signal, and the first apparatus does not need to include the bandwidth in the measurement result of the first sensing signal. This reduces signaling indication overheads.

In this embodiment of this application, the second apparatus may configure a resource pool for each parameter or a plurality of parameters, and each resource in the resource pool may be used to transmit a measurement result of a sensing signal. For example, the second apparatus configures a resource pool for the parameter 1. After determining the parameter 1, the first apparatus may randomly select a resource from the resource pool associated with the parameter 1, and transmit the measurement result of the first sensing signal based on the selected resource. Alternatively, the second apparatus may configure a resource pool, a resource in the resource pool may be used by a plurality of first apparatuses to transmit measurement results of sensing signals, and each first apparatus may select a resource from the resource pool to transmit a measurement result of a sensing signal. Alternatively, the second apparatus may configure a resource pool for each bandwidth. Different first apparatuses may select appropriate resource pools based on bandwidth capabilities of the first apparatuses, and randomly select resources from the resource pools to transmit measurement results of sensing signals. This can reduce a conflict of feedback resources during sensing measurement result reporting when different first apparatuses select a same feedback resource. In addition, the resource pool includes a plurality of orthogonal or pseudo-orthogonal sequences. Sequences of different sensing signals have a same length or correspond to a same bandwidth, and may be Zadoff-Chu (ZC) sequences, m-sequences, or frequency modulated continuous wave (frequency modulated continuous wave, FMCW) waveforms.

In addition, each parameter or sequence in the resource pool may correspond to one channel. The channel is used to carry a payload of a measurement result feedback, and the sequence is used to distinguish between measurement result reporting of different first apparatuses. Optionally, a plurality of parameters may correspond to one channel.

In a possible implementation, the second apparatus may determine the first parameter (for example, the parameter 1) based on an available carrier frequency, a sensing requirement, and the capability of the first apparatus, and configure the first parameter for the first apparatus; and the first apparatus may transmit the first sensing signal based on the first parameter. Alternatively, the first apparatus may determine the first parameter based on the bandwidth capability of the first apparatus, and transmit the first sensing signal based on the first parameter.

For example, the first configuration information may configure at least one parameter, each parameter may be used to transmit a sensing signal, the at least one parameter includes the first parameter (for example, the parameter 1), and the first apparatus transmits the first sensing signal based on the first parameter. For descriptions about how the first apparatus determines the first parameter based on the bandwidth capability of the first apparatus, refer to the descriptions of Table 1. Details are not described again.

For another example, the second apparatus may configure at least one parameter (or may be referred to as a parameter set) (carried in one piece of configuration information) for each bandwidth, and each parameter may be used to transmit a sensing signal. The first apparatus may determine an appropriate bandwidth based on the bandwidth capability of the first apparatus, and then select a parameter from at least one parameter corresponding to the bandwidth to transmit the first sensing signal.

In a possible implementation, the first apparatus may further send, to the second apparatus, a bandwidth for measuring the first sensing signal by the first apparatus. Correspondingly, the second apparatus receives the bandwidth for measuring the first sensing signal by the first apparatus.

For example, the first apparatus may further report, to the second apparatus, a bandwidth used when the first apparatus measures the first sensing signal.

The bandwidth for measuring the first sensing signal may be a bandwidth index value. The bandwidth for measuring the first sensing signal by the first apparatus is reported (which may be also carried), so that the second apparatus may obtain a bandwidth value corresponding to the measurement result of the first sensing signal. This helps the second apparatus perform further processing based on a plurality of measurement results from a same bandwidth, and therefore improves accuracy of the measurement result.

In a possible implementation, the bandwidth for measuring the first sensing signal corresponds to the measurement result of the first sensing signal. In this way, the second apparatus may determine, based on the bandwidth used when the first apparatus measures the first sensing signal, a bandwidth in which the measurement result of the first sensing signal is obtained, and further process the plurality of measurement results corresponding to the same bandwidth. This helps improve sensing performance and sensing result quality.

In a possible implementation, the first apparatus may further send, to the second apparatus, the preamble used when the first apparatus reports the capability information.

The preamble is a preamble used when the first apparatus reports the capability of the first apparatus. The second apparatus may configure a sensing signal bandwidth based on the bandwidth capability reported by the first apparatus, and establish a correspondence between the bandwidth capability and a preamble of an apparatus having the capability. The preamble used when the first apparatus reports the capability information is reported, so that the second apparatus may determine, based on the preamble and an association relationship between a preamble and a bandwidth, a bandwidth used by the first apparatus, and can further determine a bandwidth value corresponding to the measurement result of the first sensing signal. This helps the second apparatus perform further processing based on the plurality of measurement results from the same bandwidth, and therefore improves accuracy of the measurement result.

In a possible implementation, the preamble used when the first apparatus reports the capability information corresponds to the measurement result of the first sensing signal.

In this way, the second apparatus may determine, based on the preamble, the bandwidth used when the first apparatus measures the first sensing signal, and further determine the bandwidth corresponding to the measurement result of the first sensing signal. This helps the second apparatus perform further processing based on the plurality of measurement results from the same bandwidth, and therefore improves accuracy of the measurement result.

In a possible implementation, the first parameter includes at least one of the following:
a subcarrier spacing, a cyclic prefix length, sending time, receiving window time, a bandwidth, a frequency start position, a sequence (corresponding to a sensing signal sequence, for example, a reference signal sequence or a sensing signal that is reused as a reference signal), a transmit beam, and a receive beam.

A bandwidth is configured in each parameter, so that the first apparatus may select an appropriate parameter based on the bandwidth capability of the first apparatus to transmit the first sensing signal.

In a possible implementation, the first parameter includes at least one of the following:
a subcarrier spacing, a cyclic prefix length, sending time, receiving window time, a frequency start position, a sequence, a transmit beam, and a receive beam.

The transmit/receive beam may be a beam that is reciprocal or quasi-co-located (quasi-co-located, QCL) with a synchronization signal block (synchronization signal and physical broadcast channel block, SSB).

Specifically, the first parameter does not include a bandwidth, and an association relationship between the first parameter and the bandwidth may be set. In this way, the first apparatus may determine, based on the bandwidth capability of the first apparatus and an association relationship between a bandwidth and a parameter, an appropriate parameter to transmit the first sensing signal.

In addition, the second configuration information may be further used to configure at least one resource, and a resource in the at least one resource may be associated with a parameter configured by the first configuration information. For example, a parameter 1 is associated with a resource 1, and a parameter 2 is associated with a resource 2. After determining the appropriate parameter based on the first configuration information, the first apparatus may determine an appropriate resource based on the parameter and the second configuration information, to complete transmission of the measurement result of the first sensing signal.

In a possible implementation, the second configuration information may be further used to configure at least one resource, and each resource may be associated with a bandwidth capability of an apparatus. For example, a resource 1 is associated with a bandwidth 1, and a resource 2 is associated with a bandwidth 2. Therefore, the first apparatus may determine an appropriate resource based on the bandwidth capability of the first apparatus, and can further complete transmission of the measurement result of the first sensing signal based on the resource.

In conclusion, in this embodiment of this application, one resource pool can be configured for each bandwidth, a resource in the resource pool is used to transmit a measurement result of a sensing signal, and the first apparatus may select a resource from the resource pool to transmit the measurement result of the first sensing signal. Specifically, the first apparatus may select a resource from the resource pool based on a sequence (for example, a ZC sequence, an m-sequence, or an FMCW waveform) of the first sensing signal. This can effectively reduce a probability of resource collision during transmission of the measurement result of the first sensing signal.

In conclusion, in this embodiment of this application, a resource can be configured for each bandwidth and the preamble selected by the first apparatus, the resource is used to transmit a measurement result of a sensing signal, and the first apparatus may transmit the measurement result of the first sensing signal on the resource. The preamble is used to allocate a feedback resource to the first apparatus, so that a probability of resource collision during transmission of the measurement result of the first sensing signal can be effectively reduced.

In another possible implementation, the parameter 1 may be associated with a parameter 4 (for example, the second parameter). The parameter 4 may be used to transmit a third sensing signal, and the third sensing signal is a sensing signal sent by the first apparatus to the second apparatus. For content included in the parameter 4, refer to the foregoing descriptions of the first parameter. Details are not described again.

In a possible implementation, the parameter 4 may be configured by fourth configuration information, and the fourth configuration information and the first configuration information are carried in a same piece of information, or may be carried in different pieces of information. This is not limited herein.

It should be noted that the parameter 1 is associated with the parameter 4, so that the first apparatus may determine the parameter 1 based on the parameter 4 and an association relationship between the parameter 4 and the parameter 1. For example, a subcarrier spacing in the parameter 1 may be determined based on a subcarrier spacing in the parameter 4. For example, the second apparatus indicates, to the first apparatus, a multiple or factor relationship between the subcarrier spacing in the parameter 1 and the subcarrier spacing in the parameter 4, to indicate the subcarrier spacing in the parameter 1; and the first apparatus may determine the subcarrier spacing in the parameter 1 based on the subcarrier spacing in the parameter 4 and the multiple or factor relationship. In this way, signaling overheads for indicating the parameter 1 can be reduced.

In a possible implementation, that the parameter 1 is associated with the parameter 4 may be: Some parameters in the parameter 1 may be determined based on the parameter 4. For ease of description, an example in which a bandwidth in the parameter 1 is determined based on a bandwidth in the parameter 4 is used below for description. Refer to Table 3 to Table 5.

**Table 3**

| | | | | | | | | | |
|---|---|---|---|---|---|---|---|---|---|
| 4 bits | 16 | 32 | 48 | 64 | 80 | 96 | 112 | 128 | 144 |
| | | | X | | | | | | |
| 2 bits | | | 0 | 16 | 32 | 48 | | | |

As shown in Table 3, differential indication is performed in an ascending direction by using a reference bandwidth as a start point. The first apparatus receives a 4-bit reference bandwidth configuration indication (for example, the fourth configuration information), indicating 48 resource blocks (resource blocks, RBs), as shown in Table 1. The indicated bandwidth value is used as a reference value, and the first apparatus further receives an additional 2-bit differential indication (for example, the first configuration information), where the additional 2-bit differential indication indicates an offset value of a bandwidth of the first sensing signal relative to the reference bandwidth, to be specific, indicates offset values 0, 16, 32, and 48, that is, bandwidths corresponding to the first sensing signal are 48, 64, 80, and 96.

**Table 4**

| | | | | | | | | | |
|---|---|---|---|---|---|---|---|---|---|
| 4 bits | 16 | 32 | 48 | 64 | 80 | 96 | 112 | 128 | 144 |
| | | | | | | | | | X |
| 2 bits | | | | | | -48 | -32 | -16 | 0 |

As shown in Table 4, differential indication is performed in a descending direction by using a reference bandwidth as a start point. The first apparatus receives a 4-bit reference bandwidth configuration indication (for example, the fourth configuration information), indicating 144 RBs, as shown in Table 4. The indicated bandwidth value is used as a reference value, and the first apparatus further receives an additional 2-bit differential indication (for example, the first configuration information), where the additional 2-bit differential indication indicates an offset value of a bandwidth of the first sensing signal relative to the reference bandwidth, to be specific, indicates offset values 0, -16, -32, and -48, that is, bandwidths corresponding to the first sensing signal are 144, 128, 112, and 96.

**Table 5**

| | | | | | | | | | |
|---|---|---|---|---|---|---|---|---|---|
| 4 bits | 16 | 32 | 48 | 64 | 80 | 96 | 112 | 128 | 144 |
| | | | | X | | | | | |
| 2 bits | | -32 | -16 | 0 | 16 | 32 | | | |

As shown in Table 5, differential indication is performed in a descending direction and an ascending direction by using a reference bandwidth as a start point. The first apparatus receives a 4-bit reference bandwidth configuration indication (for example, the fourth configuration information), indicating 64 RBs, as shown in Table 5. The indicated bandwidth value is used as a reference value, and the first apparatus further receives an additional 2-bit differential indication (for example, the first configuration information), where the additional 2-bit differential indication indicates an offset value of a bandwidth of the first sensing signal relative to the reference bandwidth, to be specific, indicates offset values 0, -16, -32, 16, and 32, that is, bandwidths corresponding to the first sensing signal are 64, 48, 32, 80, and 96.

It should be noted that the parameter 1 and the parameter 4 may include common parameters, for example, a sending time domain resource and frequency domain resource (for example, a frequency start position and a bandwidth), a transmit beam/angle, and transmit power. All or some parameters of the parameter 4 may be used as a reference for the parameter 1, including: configuring a differential bandwidth based on a reference bandwidth as a bandwidth configuration of the first sensing signal, configuring a transmit beam of the first sensing signal by using a transmit beam of the third sensing signal or an adjacent beam thereof, configuring a transmission resource identifier of each beam, and using an offset value of transmit power of the third sensing signal as transmit power of the first sensing signal.

The parameter 1 may include some specific parameters. For example, for a receive beam or angle of the first sensing signal (which may not be configured in the parameter 4), in consideration of a case in which at least reciprocity between a transmit beam and a receive beam is supported (the capability of the first apparatus may be reported by the first apparatus to the second apparatus), the receive beam is indicated by using the transmit beam; and for start time and a window length configuration of a receiving window in the half-duplex/full-duplex mode, start time of a receiving window in the half-duplex mode is later than time for receiving a sensing symbol, and start time of a receiving window in the full-duplex mode overlaps time for sending a sensing symbol.

In a possible implementation, the first apparatus may send the third sensing signal to the second apparatus based on the parameter 4. Correspondingly, the second apparatus receives the third sensing signal. In this way, a transmit-receive separated sensing task can be completed.

S305: The first apparatus sends the measurement result of the first sensing signal to the second apparatus.

Correspondingly, the second apparatus receives the measurement result of the first sensing signal.

For example, for a transmission parameter (for example, the parameter 1) of each sensing signal, in this embodiment of this application, a resource used to report a measurement result of the sensing signal or a used configuration of a preamble (preamble) and a data channel (data channel) may be configured.

The first apparatus may transmit the measurement result of the first sensing signal by using a preamble and a data channel. A transmission configuration of each sensing signal may correspond to at least one configuration of a preamble and a data channel. Each configuration of a preamble and a data channel includes a time-frequency resource of the preamble, a preamble sequence, a time-frequency resource of the data channel, and a demodulation reference signal (demodulation reference signal, DMRS) configuration of the data channel.

The transmission configuration of each sensing signal is associated with a plurality of feedback resources, so that a conflict of feedback resources during sensing measurement reporting when different first apparatuses select a same feedback resource can be reduced.

For example, that the first apparatus sends the measurement result of the first sensing signal to the second apparatus may include:

The first apparatus determines the resource 1 based on the parameter 1, or the first apparatus determines the resource 1 based on the bandwidth capability of the first apparatus, and sends the measurement result of the first sensing signal to the second apparatus by using the resource 1.

For descriptions of determining, by the first apparatus, the resource 1 based on the parameter 1 or the bandwidth capability, refer to the foregoing descriptions of Table 1 and Table 2. Details are not described again.

In a possible implementation, that the first apparatus sends the measurement result of the first sensing signal to the second apparatus may include:

The first apparatus sends the measurement result of the first sensing signal to the second apparatus by using a preamble and a payload; or
the first apparatus sends the measurement result of the first sensing signal to the second apparatus by using a preamble.

For descriptions of this implementation, refer to the foregoing descriptions of sending, by the first apparatus, the capability information of the first apparatus to the second apparatus. Details are not described again.

Optionally, in S306, the second apparatus sends feedback information to the first apparatus.

Correspondingly, the first apparatus receives the feedback information, where the feedback information indicates that the second apparatus has received the measurement result of the first sensing signal.

In conclusion, according to the foregoing technical solutions, this embodiment of this application can support the first apparatus in completing the sensing task with low signaling overheads.

In the foregoing solutions, the second apparatus may further send, to the first apparatus, system information (for example, a SIB 1) indicating to receive the first configuration information and the second configuration information. For example, the second apparatus sends the system information to the first apparatus, where the system information includes a beam index indicating to receive the first configuration information and the second configuration information, and a beam associated with the beam index is a transmit beam of the first configuration information and the second configuration information. Specifically, the system information may indicate that a specific beam is used to send the first configuration information and the second configuration information. The specific beam may be one or more beams.

The system information may be used to schedule the first configuration information and the second configuration information. For example, the system information includes information such as a receiving window length of the first configuration information and the second configuration information (that is, a time range in which the first information may be transmitted), broadcast or on-demand request transmission, an area range configuration (for example, a specific beam configuration, cell configuration, or cell group configuration), and a periodicity or duration.

Because system messages are sent on a plurality of different beams corresponding to an SSB beam, a specific implementation in which the system information indicates the beam index for receiving the first configuration information and the second configuration information may be that system information sent on the different beams all indicates a same beam index. In addition, the transmit beam of the first configuration information and the second configuration information may be specific. For example, the beam in a specific direction may be determined based on a sensing requirement request (which may be from a CN or a network device). Carrying the same beam index in the system information sent on the different beams helps combine receive beams corresponding to adjacent system information.

FIG. 4 is an interaction flowchart of still another sensing method according to an embodiment of this application. As shown in FIG. 4, the method includes the following steps.

Optionally, in S401, a second apparatus sends first information to a first apparatus.

Correspondingly, the first apparatus receives the first information.

For descriptions of the first information, refer to the descriptions of the first information in FIG. 3. Details are not described again.

The first information may indicate that an apparatus that meets a constraint condition can perform sensing measurement and does not need to report capability information.

S402: The second apparatus sends first configuration information and second configuration information to the first apparatus.

Correspondingly, the first apparatus receives the first configuration information and the second configuration information.

In a possible implementation, the first information, the first configuration information, and the second configuration information may be carried in one piece of information, or the first information, the first configuration information, and the second configuration information are carried in different pieces of information. This is not limited herein.

It should be noted that when the first information, the first configuration information, and the second configuration information are carried in different pieces of information, the first information, the first configuration information, and the second configuration information may be sent simultaneously, or may not be sent simultaneously.

In another possible implementation, the first configuration information is associated with a capability of the first apparatus, or the second configuration information is associated with the capability of the first apparatus.

For example, a capability pre-associated with the first configuration information is the capability of the first apparatus; and/or a capability pre-associated with the second configuration information is the capability of the first apparatus.

The second apparatus may pre-configure a plurality of pieces of configuration information, and each piece of configuration information may be pre-associated with a capability of one apparatus. When the second apparatus sends the plurality of pieces of configuration information to a plurality of first apparatuses, each first apparatus may determine corresponding configuration information based on a capability of the first apparatus. In this way, capability information does not need to be exchanged between the first apparatus and the second apparatus. This can effectively reduce signaling overheads for exchanging the capability information between the first apparatus and the second apparatus.

For the first configuration information and the second configuration information, refer to the descriptions of the first configuration information and the second configuration information in FIG. 3. Details are not described again.

After receiving the first configuration information, the second configuration information, and the first information, the first apparatus determines, based on whether the constraint condition is met, whether to perform sensing measurement. The first apparatus autonomously selects a transmission configuration that is of a first sensing signal and that corresponds to the capability of the first apparatus, to send and receive the first sensing signal, and performs sensing measurement. For example, the first apparatus selects, based on the capability (for example, a bandwidth capability) of the first apparatus, a maximum bandwidth that can be supported, to transmit the first sensing signal. In addition, the first apparatus may measure the received first sensing signal based on a duplex capability of the first apparatus and a receiving resource configuration.

S403: The first apparatus sends a measurement result of the first sensing signal to the second apparatus.

Correspondingly, the second apparatus receives the measurement result of the first sensing signal.

Specifically, the first apparatus may transmit the first sensing signal and the measurement result of the first sensing signal based on a parameter that is in the first configuration information, that matches the capability of the first apparatus, and that is used to transmit the first sensing signal and a parameter that is in the second configuration information, that matches the capability of the first apparatus, and that is used to transmit the measurement result of the first sensing signal.

For descriptions of S403, refer to the descriptions of S305. Details are not described again.

Optionally, in S404, the second apparatus sends feedback information to the first apparatus.

Correspondingly, the first apparatus receives the feedback information, where the feedback information indicates that the second apparatus has received the measurement result of the first sensing signal.

In conclusion, according to the foregoing technical solutions, this embodiment of this application can support the first apparatus in completing a sensing task.

In the foregoing solution, in a possible implementation, the second apparatus may send, to the first apparatus, system information indicating to receive the first configuration information and the second configuration information. For example, the second apparatus sends the system information to the first apparatus, where the system information includes information indicating a beam index for receiving the first configuration information and the second configuration information, and a beam associated with the beam index is a transmit beam of the first configuration information and the second configuration information. Alternatively, the system information may include information indicating that a specific beam is used to send the first configuration information and the second configuration information. The specific beam may be one or more beams.

Because system messages are sent on a plurality of different beams corresponding to an SSB beam, a specific implementation in which the system information indicates the beam index for receiving the first configuration information and the second configuration information may be that system information sent on the different beams all indicates a same beam index. In addition, carrying the same beam index in the system information sent on the different beams helps combine receive beams corresponding to adjacent system information.

It should be noted that, in embodiments of this application, the first apparatus may be an apparatus in a connected state, an apparatus in an inactive state, a low power consumption apparatus, or an apparatus in an idle state. In this way, apparatuses in different states can be all supported in completing a sensing task.

The apparatuses in the different states are all enabled to participate in a collaborative sensing task, so that an available range of collaborative sensing is greatly increased, geographic space in which sensing can be performed is increased, and sensing quality is improved.

FIG. 5 is a diagram of a sensing procedure according to an embodiment of this application. As shown in FIG. 5, a first apparatus may determine sensing SIB-related scheduling information by receiving a SIB 1, and receive the sensing SIB (which may be the first configuration information and second configuration information) based on the scheduling information. The first apparatus may complete transmission and measurement of a first sensing signal based on the sensing SIB, and complete transmission of a measurement result of the first sensing signal by using a preamble and a payload.

Finally, apparatus embodiments in embodiments of this application are described.

To implement functions in the methods provided in this application, the first apparatus and the second apparatus each may include a hardware structure and/or a software module, to implement the foregoing functions in a form of the hardware structure, the software module, or a combination of the hardware structure and the software module. Whether a function in the foregoing functions is performed by using the hardware structure, the software module, or the hardware structure and the software module depends on particular applications and design constraint conditions of the technical solutions.

FIG. 6 is a block diagram of a communication apparatus according to an embodiment of this application. The communication apparatus includes a processor 610 and a communication interface 620. The processor 610 and the communication interface 620 may be connected to each other through a bus 630. The communication apparatus may be a first apparatus, or may be a second apparatus.

Optionally, the communication apparatus may further include a memory 640. The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more central processing units (central processing units, CPUs). When the processor 610 is one CPU, the CPU may be a single-core CPU, or may be a multi-core CPU.

When the communication apparatus is the first apparatus, for example, the processor 610 is configured to perform the following operations: receiving first configuration information and second configuration information; and sending a measurement result of a first sensing signal based on the second configuration information.

When the communication apparatus is the second apparatus, for example, the processor 610 is configured to perform the following operations: sending first configuration information and second configuration information; and receiving a measurement result of a first sensing signal.

The foregoing content is merely used as an example for description. The communication apparatus is the first apparatus or the second apparatus, and is responsible for performing the methods or steps related to the first apparatus or the second apparatus in the method embodiments.

The foregoing descriptions are merely example descriptions. For specific content, refer to the content shown in the method embodiments.

It should be noted that, for implementations of various operations in FIG. 6, reference may be made to corresponding descriptions in the method embodiments shown in FIG. 2 to FIG. 5.

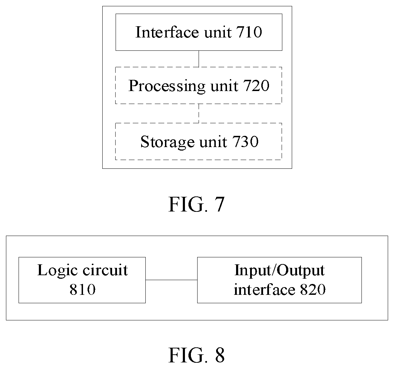

FIG. 7 is a block diagram of another communication apparatus according to an embodiment of this application. The communication apparatus may be a first apparatus or a second apparatus, or may be a chip or a module in the first apparatus or the second apparatus, and is configured to implement the method in the foregoing embodiments.

The communication apparatus includes an interface unit 710. The interface unit 710 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again.

When the communication apparatus is the first apparatus, for example, the interface unit 710 is configured to receive first configuration information and second configuration information, and is further configured to send a measurement result of a first sensing signal.

Optionally, the communication apparatus may further include a processing unit 720, configured to perform content related to steps such as processing and coordination of the first apparatus. For example, the processing unit 720 is configured to determine a first parameter based on a bandwidth capability of the first apparatus.

When the communication apparatus is the second apparatus, for example, the interface unit 710 is configured to send first configuration information and second configuration information, and is further configured to receive a measurement result of a first sensing signal.

Optionally, the communication apparatus may further include a processing unit 720, configured to perform content related to steps such as processing and coordination of the second apparatus. For example, the processing unit 720 is configured to process the measurement result of the first sensing signal.

The foregoing content is merely used as an example for description. The communication apparatus is the first apparatus or the second apparatus, and is responsible for performing the methods or steps related to the first apparatus or the second apparatus in the method embodiments.

Optionally, the communication apparatus further includes a storage unit 730, and the storage unit 730 is configured to store a program or code used to perform the foregoing method.

It should be noted that the apparatus embodiment shown in FIG. 7 is used to implement the content described in FIG. 2 to FIG. 5. For specific execution steps and methods of the apparatus shown in FIG. 7, refer to the content described in the method embodiments.

FIG. 8 is a block diagram of a chip system according to an embodiment of this application. The chip system is configured to implement functions of a first apparatus or a second apparatus. The chip system may be a chip in the first apparatus or the second apparatus.

The chip system includes an input/output interface 820 and a logic circuit 810. The input/output interface 820 may be an input/output circuit. The logic circuit 810 may be a signal processor, a chip, or another integrated circuit that can implement the method in this application. The input/output interface 820 is configured to input or output a signal or data.

For example, when the chip system is the first apparatus, the input/output interface 820 is configured to receive first configuration information and second configuration information. For example, the logic circuit 820 may be configured to determine a first parameter based on a bandwidth capability of the first apparatus. The logic circuit 810 is further configured to perform some or all of the steps in any one of the methods provided in this application.

For example, the chip system is the second apparatus, and the input/output interface 820 is configured to send first configuration information and second configuration information. The logic circuit 810 is configured to perform some or all of the steps in any one of the methods provided in this application, for example, processing a measurement result of a first sensing signal.

In a possible implementation, the logic circuit 810 executes instructions stored in a memory, to implement a function implemented by the first apparatus or the second apparatus.

The foregoing descriptions of the chip system are merely example descriptions. The chip system can be configured to perform the method in the foregoing embodiments. For specific content, refer to the descriptions of the foregoing method embodiments. Details are not described herein again.

This application further provides a chip. The chip includes a processor, configured to invoke, from a memory, instructions stored in the memory and run the instructions, to enable a communication device in which the chip is installed to perform the method in the foregoing examples.

This application further provides another chip. The chip includes an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor. The processor is configured to be coupled to a memory, and configured to perform the method and function of the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A sensing method, applied to a first apparatus, and comprising:
receiving first configuration information and second configuration information, wherein the first configuration information indicates a configuration of a first sensing signal, the second configuration information indicates a transmission configuration of a measurement result of the first sensing signal, and the first sensing signal is a signal sent and received by the first apparatus; and
sending the measurement result of the first sensing signal based on the second configuration information.

2. The method according to claim 1, wherein a measurement method of the first sensing signal is predefined.

3. The method according to claim 1, wherein the method further comprises:
receiving third configuration information, wherein the third configuration information indicates a measurement method of the first sensing signal.

4. The method according to claim 2 or 3, wherein the measurement method of the first sensing signal comprises at least one of the following:
a round trip time measurement method, an angle measurement method, and a Doppler measurement method.

5. The method according to any one of claims 1 to 4, wherein the measurement result of the first sensing signal comprises at least one of the following:
a transmission resource identifier, received signal strength, received signal strength of each multipath component, a time difference between sending time and receiving time, a receiving timestamp, and a difference between the receiving timestamp and a receiving timestamp of a second sensing signal, wherein the second sensing signal is a signal sent by a second apparatus to the first apparatus.

6. The method according to any one of claims 1 to 4, wherein the measurement result of the first sensing signal comprises at least one of the following:
a transmission resource identifier, a transmit beam, a receive beam, received signal strength, received signal strength of each multipath component, and a receiving timestamp.

7. The method according to any one of claims 1 to 4, wherein the measurement result of the first sensing signal comprises at least one of the following:
a transmission resource identifier, a Doppler shift value obtained based on the first sensing signal, a velocity value that is of a sensing target and that is obtained based on the first sensing signal, and a receiving timestamp.

8. The method according to any one of claims 1 to 7, wherein the method further comprises:
receiving first information, wherein the first information indicates a constraint condition, and an apparatus that meets the constraint condition performs at least one of sensing measurement and capability reporting.

9. The method according to claim 8, wherein the constraint condition comprises at least one of the following:
received signal strength, a bandwidth capability, a geographic location range, a beam range, a duplex capability type, a measurement method, beam reciprocity, a maximum quantity of antenna ports, a velocity range, and an apparatus type.

10. The method according to any one of claims 1 to 9, wherein the method further comprises:
receiving second information, wherein the second information is used to request to feed back capability information, and the capability information indicates a capability that is of the first apparatus and that is associated with the first sensing signal; and
sending the capability information.

11. The method according to claim 10, wherein sending the capability information comprises:
sending the capability information by using a preamble and a payload; or
sending the capability information by using a preamble.

12. The method according to claim 10 or 11, wherein the capability information comprises at least one of the following:
a bandwidth capability, a duplex capability type, a beam reciprocity capability, a measurement method, and a maximum quantity of antenna ports.

13. The method according to any one of claims 1 to 12, wherein
the first configuration information is associated with a capability of the first apparatus; and/or
the second configuration information is associated with the capability of the first apparatus.

14. The method according to claim 13, wherein that the first configuration information is associated with the capability of the first apparatus comprises:
the first configuration information is configured based on the capability of the first apparatus; or
a capability pre-associated with the first configuration information is the capability of the first apparatus.

15. The method according to claim 13, wherein that the second configuration information is associated with the capability of the first apparatus comprises:
the second configuration information is configured based on the capability of the first apparatus; or
a capability pre-associated with the second configuration information is the capability of the first apparatus.

16. The method according to any one of claims 1 to 15, wherein the first configuration information is used to configure a first parameter; and
the first parameter comprises at least one of the following:
a subcarrier spacing, a cyclic prefix length, sending time, receiving window time, a bandwidth, a frequency start position, a sequence, a transmit beam, and a receive beam; or
the first parameter comprises at least one of the following:
a subcarrier spacing, a cyclic prefix length, sending time, receiving window time, a frequency start position, a sequence, a transmit beam, and a receive beam.

17. The method according to any one of claims 1 to 16, wherein sending the measurement result of the first sensing signal comprises:
sending the measurement result of the first sensing signal by using a preamble and a payload; or
sending the measurement result of the first sensing signal by using a preamble.

18. The method according to any one of claims 1 to 17, wherein the method further comprises:
receiving fourth configuration information, wherein the fourth configuration information is used to configure transmission of a third sensing signal, the third sensing signal is a sensing signal sent by the first apparatus to the second apparatus, the fourth configuration information is used to configure a second parameter, the second parameter is used for transmission of the third sensing signal, and the first parameter is associated with the second parameter.

19. The method according to claim 18, wherein the second parameter comprises at least one of the following:
a subcarrier spacing, a cyclic prefix length, sending time, receiving window time, a bandwidth, a frequency start position, a sequence, a transmit beam, and a receive beam.

20. The method according to claim 19, wherein the first parameter comprises the bandwidth, and the bandwidth in the first parameter is determined based on the bandwidth in the second parameter.

21. The method according to any one of claims 18 to 20, wherein the method further comprises:
sending the third sensing signal based on the second parameter.

22. The method according to any one of claims 1 to 21, wherein
the first apparatus is an apparatus in an inactive state;
the first apparatus is a low power consumption apparatus;
the first apparatus is an apparatus in an idle state; or
the first apparatus is an apparatus in a connected state.

23. The method according to any one of claims 1 to 22, wherein
the first configuration information and/or the second configuration information are/is carried in system information, or the first configuration information and/or the second configuration information are/is carried in capability reporting response information.

24. The method according to any one of claims 10 to 22, wherein the first configuration information and/or the second configuration information are/is carried in capability reporting response information, and the second information is carried in system information.

25. The method according to any one of claims 1 to 24, wherein the method further comprises:
sending a bandwidth for measuring the first sensing signal.

26. The method according to claim 25, wherein the bandwidth for measuring the first sensing signal corresponds to the measurement result of the first sensing signal.

27. The method according to any one of claims 11 to 26, wherein the method further comprises:
sending the preamble used when the first apparatus reports the capability information.

28. The method according to claim 27, wherein the preamble used when the first apparatus reports the capability information corresponds to the measurement result of the first sensing signal.

29. A sensing method, applied to a second apparatus, and comprising:
sending first configuration information and second configuration information, wherein the first configuration information indicates a configuration of a first sensing signal, the second configuration information indicates a transmission configuration of a measurement result of the first sensing signal, and the first sensing signal is a signal sent and received by a first apparatus; and
receiving the measurement result of the first sensing signal.

30. The method according to claim 29, wherein a measurement method of the first sensing signal is predefined.

31. The method according to claim 29, wherein the method further comprises:
sending third configuration information, wherein the third configuration information indicates a measurement method of the first sensing signal.

32. The method according to claim 30 or 31, wherein the measurement method of the first sensing signal comprises at least one of the following:
a round trip time measurement method, an angle measurement method, and a Doppler measurement method.

33. The method according to any one of claims 29 to 32, wherein the measurement result of the first sensing signal comprises at least one of the following:
a transmission resource identifier, received signal strength, received signal strength of each multipath component, a time difference between sending time and receiving time, a receiving timestamp, and a difference between the receiving timestamp and a receiving timestamp of a second sensing signal, wherein the second sensing signal is a signal sent by the second apparatus to the first apparatus.

34. The method according to any one of claims 29 to 32, wherein the measurement result of the first sensing signal comprises at least one of the following:
a transmission resource identifier, a transmit beam, a receive beam, received signal strength, received signal strength of each multipath component, and a receiving timestamp.

35. The method according to any one of claims 29 to 32, wherein the measurement result of the first sensing signal comprises at least one of the following:
a transmission resource identifier, a Doppler shift value obtained based on the first sensing signal, a velocity value that is of a sensing target and that is obtained based on the first sensing signal, and a receiving timestamp.

36. The method according to any one of claims 29 to 35, wherein the method further comprises:
sending first information, wherein the first information indicates a constraint condition, and an apparatus that meets the constraint condition performs at least one of sensing measurement and capability reporting.

37. The method according to claim 36, wherein the constraint condition comprises at least one of the following:
received signal strength, a bandwidth capability, a geographic location range, a beam range, a duplex capability type, a measurement method, beam reciprocity, a maximum quantity of antenna ports, a velocity range, and an apparatus type.

38. The method according to any one of claims 29 to 37, wherein the method further comprises:
sending second information, wherein the second information is used to request to feed back capability information, and the capability information indicates a capability that is of the first apparatus and that is associated with the first sensing signal; and
receiving the capability information.

39. The method according to claim 38, wherein receiving the capability information comprises:
receiving the capability information by using a preamble and a payload; or
receiving the capability information by using a preamble.

40. The method according to claim 38 or 39, wherein the capability information comprises at least one of the following:
a bandwidth capability, a duplex capability type, a measurement method, a beam reciprocity capability, and a maximum quantity of antenna ports.

41. The method according to any one of claims 29 to 40, wherein
the first configuration information is associated with a capability of the first apparatus; and/or
the second configuration information is associated with the capability of the first apparatus.

42. The method according to claim 41, wherein that the first configuration information is associated with the capability of the first apparatus comprises:
the first configuration information is configured based on the capability of the first apparatus; or
a capability pre-associated with the first configuration information is the capability of the first apparatus.

43. The method according to claim 41, wherein that the second configuration information is associated with the capability of the first apparatus comprises:
the second configuration information is configured based on the capability of the first apparatus; or
a capability pre-associated with the second configuration information is the capability of the first apparatus.

44. The method according to any one of claims 29 to 43, wherein the first configuration information is used to configure a first parameter; and
the first parameter comprises at least one of the following:
a subcarrier spacing, a cyclic prefix length, sending time, receiving window time, a bandwidth, a frequency start position, a sequence, a transmit beam, and a receive beam; or
the first parameter comprises at least one of the following:
a subcarrier spacing, a cyclic prefix length, sending time, receiving window time, a frequency start position, a sequence, a transmit beam, and a receive beam.

45. The method according to any one of claims 29 to 44, wherein receiving the measurement result of the first sensing signal comprises:
receiving the measurement result of the first sensing signal by using a preamble and a payload; or
receiving the measurement result of the first sensing signal by using a preamble.

46. The method according to any one of claims 29 to 45, wherein the method further comprises:
sending fourth configuration information, wherein the fourth configuration information is used to configure transmission of a third sensing signal, the third sensing signal is a sensing signal sent by the first apparatus to the second apparatus, the fourth configuration information is used to configure a second parameter, the second parameter is used for transmission of the third sensing signal, and the first parameter is associated with the second parameter.

47. The method according to claim 46, wherein the second parameter comprises at least one of the following:
a subcarrier spacing, a cyclic prefix length, sending time, receiving window time, a bandwidth, a frequency start position, a sequence, a transmit beam, and a receive beam.

48. The method according to claim 47, wherein the first parameter comprises the bandwidth, and the bandwidth in the first parameter is determined based on the bandwidth in the second parameter.

49. The method according to any one of claims 29 to 48, wherein
the first apparatus is an apparatus in an inactive state;
the first apparatus is a low power consumption apparatus;
the first apparatus is an apparatus in an idle state; or
the first apparatus is an apparatus in a connected state.

50. The method according to any one of claims 29 to 49, wherein
the first configuration information and/or the second configuration information are/is carried in system information, or the first configuration information and/or the second configuration information are/is carried in capability reporting response information.

51. The method according to any one of claims 32 to 49, wherein the first configuration information and/or the second configuration information are/is carried in capability reporting response information, and the second information is carried in system information.

52. The method according to any one of claims 29 to 51, wherein the method further comprises:
receiving a bandwidth for measuring the first sensing signal by the first apparatus.

53. The method according to claim 52, wherein the bandwidth for measuring the first sensing signal by the first apparatus corresponds to the measurement result of the first sensing signal.

54. The method according to any one of claims 39 to 53, wherein the method further comprises:
receiving the preamble used when the first apparatus reports the capability information.

55. The method according to claim 54, wherein the preamble used when the first apparatus reports the capability information corresponds to the measurement result of the first sensing signal.

56. A communication apparatus, comprising a module configured to perform the method according to any one of claims 1 to 28 or claims 29 to 55.

57. A communication apparatus, comprising a processor, configured to execute computer instructions stored in a memory,
to enable the communication apparatus to perform the method according to any one of claims 1 to 28, or
to enable the communication apparatus to perform the method according to any one of claims 29 to 55.

58. The communication apparatus according to claim 57, wherein the communication apparatus further comprises the memory.

59. The communication apparatus according to claim 57 or 58, wherein the communication apparatus further comprises a communication interface, the communication interface is coupled to the processor, and the communication interface is configured to input and/or output information.

60. A chip, wherein the chip is connected to a memory; and
the chip is configured to read and execute a software program stored in the memory,
to perform the method according to any one of claims 1 to 28 or claims 29 to 55.

61. A communication system, comprising the communication apparatus according to claim 56.

62. A computer-readable storage medium, wherein the computer-readable storage medium stores computer instructions; and
when the computer instructions are run on a computer,
the method according to any one of claims 1 to 28 is performed, or
the method according to any one of claims 29 to 55 is performed.

63. A computer program product, wherein the computer program product comprises computer program code, wherein
when the computer program code is run on a computer,
the method according to any one of claims 1 to 28 is performed, or
the method according to any one of claims 29 to 55 is performed.
